# EUROPEAN PATENT SPECIFICATION

(11) **EP 4 635 798 B1**
(45) Date of publication and mention of the grant of the patent: **18.11.2026**
(21) Application number: 25164632.9
(22) Date of filing: 19.03.2025
(51) Int. Cl.: B60Q 1/14

(54) **LAMP CONTROL SYSTEM, LAMP CONTROL METHOD, AND VEHICLE**
LAMPENSTEUERUNGSSYSTEM, LAMPENSTEUERUNGSVERFAHREN UND FAHRZEUG
SYSTÈME DE COMMANDE DE LAMPE, PROCÉDÉ DE COMMANDE DE LAMPE ET VÉHICULE

(30) Priority: 09.04.2024 KR 20240048293; 11.04.2024 KR 20240048915; 11.04.2024 KR 20240048914
(43) Date of publication of application: 22.10.2025
(73) Proprietor: HYUNDAI MOBIS CO., LTD., Seoul 06141 (KR)
(72) Inventor: SUNG, Jun Young, 16891 Yongin-si, Gyeonggi-do (KR)
(74) Representative: Jung, Minkyu

(56) References cited:
- WO-A1-2024/024838
- US-A1- 2016 167 566
- US-A1- 2021 107 395
- US-A1- 2023 158 941
- US-A1- 20240 109 475

## Description

This application claims the right of priority to Korean Application No.10-2024-0048293, filed on April 9, 2024, No.10-2024-0048915, filed on April 11, 2024, and No.10-2024-0048914, filed on April 11, 2024, in the Korean Intellectual Property Office.

### BACKGROUND OF THE INVENTION

### Field of the Invention

The present invention are applicable to vehicles in all fields, and more specifically, relate to a lamp control system, a lamp control method, and a vehicle that control an amount of light of the lamp.

### Discussion of the Related Art

As utilization of a lamp for a vehicle equipped with an LED light source continues to increase, a demand for high-beam and low-beam lamp modules for the vehicle with various performances is also growing. In particular, a trend of integrating the high-beam and low-beam modules for the vehicle is becoming a significant trend. This trend is well-received in the market because of low cost, small volume, simple structure, and a wide range of functions.

As people's interest in safety when driving the vehicle is increasing, a considerable number of driving accidents occur every year because of inappropriate use of the high-beams. A lamp module for the vehicle with an intelligent front-lighting system (IFS) function may solve contradiction of high and low-beam use to some extent. In other words, it may provide excellent visibility to the vehicle and prevent glare to other vehicle drivers. The IFS function has a kind of smart control performance, and is able to control a lighting area and lighting brightness in real time by independently controlling each LED, thereby effectively preventing the glare to other vehicles and pedestrians.

Existing vehicles with the IFS function have been used in a way that a driver directly specifies a speed at which the IFS function is activated, and the IFS function is automatically activated when the vehicle travels at a speed equal to or higher than the corresponding speed. However, the existing scheme has a problem in that the lighting is controlled without considering an environment of a road on which the vehicle is traveling, so that the lighting becomes darker on a relatively dark road or becomes brighter in a relatively bright place, obstructing a view of the pedestrians or other drivers. In addition, the IFS function may be activated earlier than the driver wants, causing many malfunctions resulted from camera recognition errors, or an ADB function may be activated later than the driver wants, causing frustration.

In addition, even though the vehicle is equipped with the IFS function, there are frequent cases in which the driver does not recognize it and does not use the IFS function. Therefore, a scheme is needed that may automatically activate the IFS function based on the surrounding road environment and a driver's tendency.

US 2024/109475 A describes a light distribution control section configured to control light distribution of a headlamp based on a detected light control target object ahead of a vehicle and a detected behavior of the vehicle or an expected change thereof. The control includes changing the margin of the low luminous intensity area based on the curvature of the road and the relative speed of the preceding vehicle relative to the own vehicle.

WO 2024/024838 A1 describes an illuminating method of controlling a blur area adjacent a front vehicle according to the relative movement between the front vehicle and the subject vehicle.

US 2023/158941 A1 describes an apparatus for controlling or adjusting a beam pattern includes an output device that outputs the beam pattern, and a controller that analyzes a driving tendency of a driver and adjusts the beam pattern based on the analyzed driving tendency of the driver. Specifically, the controller may control a shadow zone area, a recovery time, brightness, and the like of the beam pattern based on the driving tendency of the driver.

US 2016/167566 A1 describes a light distribution control device for a vehicular headlamp that can be subjected to ADB (adaptive driving beam) light distribution control. A plurality of illumination regions are arranged in the left-right direction and illuminated by a headlamp in a desired light distribution pattern, and vehicle positions of a vehicle ahead are detected and selected ones of the plural illumination regions are reduced in light quantity according to the detected vehicle positions.

US 2021/107395 A1 describes a method for controlling a headlight of a motor vehicle when a full beam function is activated, in which method an object is sensed by means of an object sensor, an evaluation unit determines whether the object is a road user, a light output in an object region of the object is reduced only if the object is a road user, a width of the object region is determined, two parallel side lines are determined centrally with respect to the width, the sidelines are moved outwards up to a predefinable maximum distance of the sidelines from one another, in opposite directions to one another and transversely with respect to their extent, wherein the maximum spacing is greater than the width of the object region, the sidelines are moved back as far as the transverse extent, and the headlight reduces the light output in a region which is bounded laterally by the sidelines.

### SUMMARY OF THE INVENTION

The present invention is for solving the above-described problems, and to control a width of a shadow area for each driver or situation, depending on internal or external factors.

In addition, according to embodiments, the present invention is to control a width of a shadow area to be restored when necessary.

In addition, according to embodiments, the present invention is to differentially control a width of a left area and a width of a right area of a shadow area based on a shape of a curved road when a vehicle is traveling on the curved road.

In addition, according to embodiments, the present invention is to provide a beam pattern of a lamp optimized for each driver or situation, depending on internal or external factors.

The problem to be solved by the present invention is not limited to the above, and other problems not mentioned will be clearly understood by those skilled in the art to which the present invention belongs from the description below.

According to the present invention, a system according to claim 1 for controlling a lamp, a method according to claim 12 for controlling a lamp are set forth in the independent claims. Preferred embodiments are provided in the dependent claims. According to the invention, a system for controlling a lamp includes the features of claim 1.

The internal factors include at least one of acceleration/deceleration tendency information, safe distance tendency information, reaction speed tendency information, lane keeping tendency information of a driver, or any combination thereof, wherein the external factors include at least one of information on a road where the vehicle is traveling, brightness information of the road where the vehicle is traveling, steering information of the vehicle, illuminance information, travel direction information of the object, or any combination thereof, and wherein the processor may be further configured to: analyze the internal factors based on at least one of the acceleration tendency information, the safe distance tendency information, the reaction speed tendency information, the lane keeping tendency information of the driver, or any combination thereof; and analyze the external factors based on at least one of the road information, the road brightness information, the steering information, the illuminance information, the travel direction information, or any combination thereof.

The sensing module may be further configured to sense the road information, wherein the processor may be configured to receive the road information, and when the road where the vehicle is traveling corresponds to a specific road based on the received road information, control the width of the shadow margin area.

The sensing module may be further configured to sense the road brightness information, wherein the processor may be further configured to: receive the road brightness information; and in response to brightness of the road where the vehicle is traveling being equal to or lower than a reference brightness based on the received road brightness information, control the width of the shadow margin area.

The sensing module may be further configured to sense the steering information, wherein the processor may be further configured to: receive the steering information; and in response to a steering degree of the vehicle being equal to or greater than a reference steering degree based on the received steering information, control the width of the shadow margin area.

The sensing module may be further configured to sense the illuminance information, wherein the processor may be further configured to: receive the illuminance information; and in response to a vehicle external illuminance value being equal to or lower than a reference illuminance value based on the received illuminance information, control the width of the shadow margin area.

The sensing module may be further configured to sense the travel direction information, wherein the processor may be further configured to: receive the travel direction information; and in response to a travel direction of the object corresponding to the same direction as a travel direction of the vehicle based on the received travel direction information, control the width of the shadow margin area.

The processor is further configured, according to the invention, to: set a specific period of time based on at least one of the internal factors, the external factors, or any combination thereof; and temporarily control the width of the shadow margin area and restore the width of the shadow margin area after the specific period of time elapses.

The sensing module may be further configured to sense a road where the vehicle is traveling, wherein the processor may be further configured to, in response to a determination that the road where the vehicle is traveling is a curved road based on the sensed road information, control one of a width of a left area and a width of a right area of the shadow margin area to a first width or a second width based on at least one of the internal factors and the external factors, and wherein the first width may have a smaller value than the second width.

The processor may be further configured to control the beam patterns of the pair of lamps to a specific beam pattern such that at least one of irradiation distances and widths of the beams irradiated by the pair of lamps varies based on at least one of the internal factors and the external factors.

The internal factors include at least one of acceleration/deceleration tendency information, safe distance tendency information, lane change tendency information of a driver, or any combination thereof, wherein the external factors may include at least one of information on a road where the vehicle is traveling, brightness information of the road where the vehicle is traveling, travel state information of the vehicle, or any combination thereof, and wherein the processor may be further configured to: analyze the internal factors based on at least one of the acceleration/deceleration tendency information, the safe distance tendency information, the lane change tendency information of the driver, or any combination thereof; and analyze the external factors based on at least one of the information on the road where the vehicle is traveling, the brightness information of the road where the vehicle is traveling, the travel state information of the vehicle, or any combination thereof.

The specific beam pattern may include a first beam pattern, a second beam pattern, and a third beam pattern, wherein an irradiation distance of a beam irradiated based on the second beam pattern may be smaller than an irradiation distance of a beam irradiated based on the first beam pattern, and a width of the beam irradiated based on the second beam pattern is greater than a width of the beam irradiated based on the first beam pattern, and wherein an irradiation distance of a beam irradiated based on the third beam pattern may be greater than the irradiation distance of the beam irradiated based on the first beam pattern, and a width of the beam irradiated based on the third beam pattern is smaller than the width of the beam irradiated based on the first beam pattern.

According to the invention, a method for controlling a lamp of controlling respective beam patterns of a pair of lamps configured to irradiate beams forward based on the respective beam patterns thereof, includes the features of claim 12.

The internal factors include at least one of acceleration/deceleration tendency information, safe distance tendency information, reaction speed tendency information, lane keeping tendency information of a driver, or any combination thereof, wherein the external factors include at least one of information on a road where the vehicle is traveling, brightness information of the road where the vehicle is traveling, steering information of the vehicle, illuminance information, travel direction information of the object, or any combination thereof, and wherein the control step may include: analyzing the internal factors based on at least one of the acceleration tendency information, the safe distance tendency information, the reaction speed tendency information, the lane keeping tendency information of the driver, or any combination thereof; and analyzing the external factors based on at least one of the road information, the road brightness information, the steering information, the illuminance information, the travel direction information, or any combination thereof.

In yet another general aspect of the invention, a vehicle includes the system of claim 1.

Effects obtainable from the present invention are not limited to the effects mentioned above, and other effects not mentioned will be clearly understood by those skilled in the art from the description below.

### BRIEF DESCRIPTION OF THE DRAWINGS

FIG. 1 is a block diagram of a vehicle system according to embodiments.
FIG. 2 is an exemplary diagram showing a structure of a vehicle according to embodiments.
FIG. 3 shows a lamp control system according to embodiments.
FIG. 4 shows a shadow area formed by a lamp control system according to embodiments.
FIG. 5 shows lamp control of a vehicle according to embodiments.
FIG. 6 shows examples of internal factors of a lamp control system according to embodiments.
FIG. 7 shows a lamp control method according to embodiments.
FIG. 8 shows a shadow area formed by a lamp control system according to embodiments when a vehicle is traveling on a curved road.
FIG. 9 shows lamp control of a vehicle according to embodiments.
FIG. 10 shows examples of internal factors of a lamp control system according to embodiments.
FIG. 11 shows a lamp control method according to embodiments.
FIG. 12 shows lamp control of a vehicle according to embodiments.
FIG. 13 shows examples of internal factors of a lamp control system according to embodiments.

### DETAILED DESCRIPTION OF THE INVENTION

Preferred embodiments of the invention will be described in detail, and examples of which will be illustrated in the accompanying drawings. The detailed description below with reference to the accompanying drawings is intended to describe the preferred embodiments rather than to illustrate only embodiments that may be implemented according to the embodiments. The detailed description below includes details to provide a thorough understanding of the embodiments. However, it will be apparent to one skilled in the art that the embodiments may be practiced without such details.

Most of terms used in the embodiments are generally chosen from those widely used in the art, but some terms are arbitrarily chosen by the applicant and meanings thereof are described in detail in the following description as necessary. Therefore, the embodiments should be understood based on the intended meanings of the terms, not on the mere names or meanings of the terms.

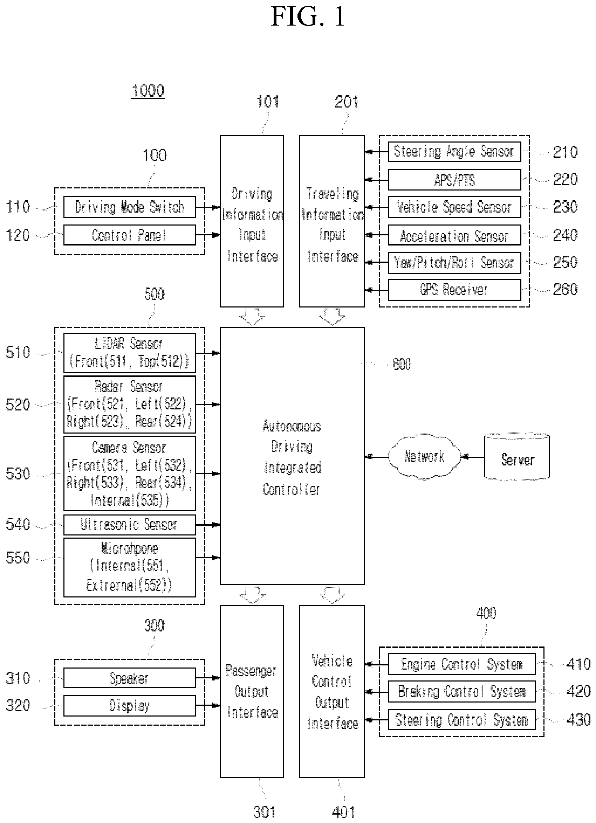

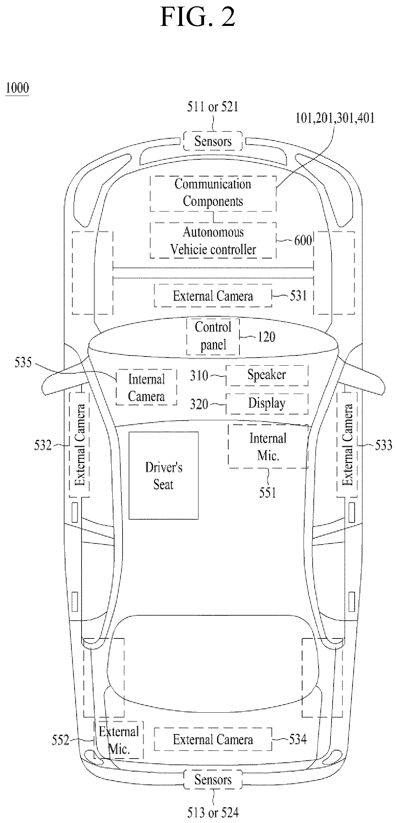

FIG. 1 is a block diagram of a vehicle system according to embodiments. FIG. 2 is an exemplary diagram showing a structure of a vehicle according to embodiments.

FIG. 2 shows a vehicle to which a vehicle system in FIG. 1 is applied.

A vehicle according to embodiments may be constructed as in FIG. 2 and may perform autonomous driving by an autonomous driving control system. The vehicle according to embodiments may be referred to as an autonomous vehicle, a robot, an urban air mobility (UAM), an autonomous driving device, and the like.

An autonomous vehicle 1000 may be implemented centered on an autonomous driving integrated controller 600 that transmits and receives data necessary for controlling the autonomous driving of the autonomous vehicle via a driving information input interface 101, a travel information input interface 201, a passenger output interface 301, and an autonomous vehicle control output interface 401. However, the autonomous driving integrated controller 600 may also be referred to as a processor, a processor, or simply a controller herein.

The autonomous driving integrated controller 600 may obtain driving information based on passenger's manipulation of a user input unit 100 in an autonomous driving mode or a manual driving mode of the autonomous vehicle via the driving information input interface 101. As shown in FIG. 1, the user input unit 100 may include a driving mode switch 110 and a control panel 120 (e.g., a navigation terminal mounted in the autonomous vehicle, a smart phone or a tablet PC carried by the passenger, or the like), and accordingly, the driving information may include driving mode information and navigation information of the autonomous vehicle.

For example, a driving mode (i.e., autonomous driving mode/manual driving mode or sports mode/eco mode/safe mode/normal mode) of the autonomous vehicle determined based on passenger's manipulation of the driving mode switch 110 may be transmitted to the autonomous driving integrated controller 600 as the driving information via the driving information input interface 101.

In addition, the navigation information such as a passenger's destination and a route to the destination (the shortest route, a preferred route, or the like selected by the passenger among candidate routes to the destination) input by the passenger via the control panel 120 may be transmitted to the autonomous driving integrated controller 600 as the driving information via the driving information input interface 101.

In one example, the control panel 120 may be implemented as a touch screen panel that provides a user interface (UI) for the passenger to input or modify information for controlling the autonomous driving of the autonomous vehicle, and in this case, the driving mode switch 110 described above may be implemented as a touch button on the control panel 120.

In addition, the autonomous driving integrated controller 600 may obtain travel information indicating a travel state of the autonomous vehicle via the travel information input interface 201. The travel information may include various information indicating the travel state and a behavior of the autonomous vehicle, such as a steering angle formed by the passenger manipulating a steering wheel, an accelerator pedal stroke or a brake pedal stroke generated by pressing an accelerator pedal or a brake pedal, and a behavior of the autonomous vehicle including a vehicle speed, an acceleration, a yaw, a pitch, and a roll. Each of the travel information may be detected by a driving controller 200 including a steering angle sensor 210, an accel position sensor (APS)/pedal travel sensor (PTS) 220, a vehicle speed sensor 230, an acceleration sensor 240, and a yaw/pitch/roll sensor 250, as illustrated in FIG. 1.

Furthermore, the travel information of the autonomous vehicle may include location information of the autonomous vehicle, and the location information of the autonomous vehicle may be obtained via a global positioning system (GPS) receiver 260 applied to the autonomous vehicle. Such travel information may be transmitted to the autonomous driving integrated controller 600 via the travel information input interface 201 and used to control the travel of the autonomous vehicle in the autonomous driving mode or the manual driving mode of the autonomous vehicle.

In addition, the autonomous driving integrated controller 600 may transmit travel state information provided to the passenger in the autonomous driving mode or the manual driving mode of the autonomous vehicle to an output unit 300 via the passenger output interface 301. That is, the autonomous driving integrated controller 600 may transmit the travel state information of the autonomous vehicle to the output unit 300, thereby allowing the passenger to identify an autonomous driving state or a manual driving state of the autonomous vehicle based on the travel state information output via the output unit 300. The travel state information may include various information indicating the travel state of the autonomous vehicle, such as a current driving mode, a shift range, the vehicle speed, and the like of the autonomous vehicle.

In addition, when determining that a warning is necessary for the passenger in the autonomous driving mode or the manual driving mode of the autonomous vehicle together with the travel state information described above, the autonomous driving integrated controller 600 may transmit warning information to the output unit 300 via the passenger output interface 301, so that the output unit 300 may output the warning to the passenger. To output such travel state information and warning information audibly and visually, the output unit 300 may include a speaker 310 and a display device 320 as illustrated in FIG. 1. In this regard, the display device 320 may be implemented as the same device as the control panel 120 described above, or may be implemented as a separate, independent device.

In addition, the autonomous driving integrated controller 600 may transmit control information for controlling the travel of the autonomous vehicle in the autonomous driving mode or the manual driving mode of the autonomous vehicle to a lower control system 400 applied to the autonomous vehicle via the autonomous vehicle control output interface 401. The lower control system 400 for controlling the control of the autonomous vehicle may include an engine control system 410, a braking control system 420, and a steering control system 430 as illustrated in FIG. 1, and the autonomous driving integrated controller 600 may transmit engine control information, braking control information, and steering control information as the control information to each lower control system 410, 420, and 430 via the autonomous vehicle control output interface 401. Accordingly, the engine control system 410 may control the vehicle speed and the acceleration of the autonomous vehicle by increasing or decreasing an amount of fuel supplied to an engine, the braking control system 420 may control braking of the autonomous vehicle by adjusting a braking force of the autonomous vehicle, and the steering control system 430 may control steering of the autonomous vehicle via a steering device (e.g., a motor driven power steering (MDPS) system) applied to the autonomous vehicle.

As described above, the autonomous driving integrated controller 600 of the present embodiment may obtain the driving information based on the manipulation of the passenger and the travel information indicating the travel state of the autonomous vehicle via the driving information input interface 101 and the travel information input interface 201, respectively, may transmit the travel state information and the warning information generated based on an autonomous driving algorithm to the output unit 300 via the passenger output interface 301, and may operate such that the travel control of the autonomous vehicle is performed by transmitting the control information generated based on the autonomous driving algorithm to the lower control system 400 via the autonomous vehicle control output interface 401.

In one example, to ensure stable autonomous driving of the autonomous vehicle, it is necessary to continuously monitor the travel state by accurately measuring a travel environment of the autonomous vehicle and control the travel based on the measured travel environment. To this end, the autonomous driving device of the present embodiment may include a sensing module 500 for detecting an object surrounding the autonomous vehicle, such as a surrounding autonomous vehicle, the pedestrian, the road, or a fixed facility (e.g., a traffic light, a milestone, a traffic sign, a construction fence, and the like), as illustrated in FIG. 1.

The sensing module 500 may include one or more of a lidar sensor 510, a radar sensor 520, and a camera sensor 530 for detecting the surrounding object outside the autonomous vehicle as illustrated in FIG. 1.

The lidar sensor 510 may detect the surrounding object outside the autonomous vehicle by transmitting a laser signal to surroundings of the autonomous vehicle and receiving a signal reflected from the corresponding object and returned, and may detect the surrounding object located within predefined set distance, set vertical field of view, and set horizontal field of view based on specifications thereof. The lidar sensor 510 may include a front lidar sensor 511, an upper lidar sensor 512, and a rear lidar sensor 513 installed on a front surface, an upper portion, and a rear surface of the autonomous vehicle, respectively, but the installation locations and the number of installed units thereof are not limited to those in a specific embodiment. A threshold value for determining validity of the laser signal reflected from the corresponding object and returned may be stored in advance in a memory (not shown) of the autonomous driving integrated controller 600, and the autonomous driving integrated controller 600 may determine a location (including a distance to the corresponding object), a speed, and a moving direction of the corresponding object by measuring a time it takes for the laser signal transmitted via the lidar sensor 510 to be reflected from the corresponding object and returned.

The radar sensor 520 may detect the surrounding object outside the autonomous vehicle by emitting an electromagnetic wave to surroundings of the autonomous vehicle and receiving a signal reflected from the corresponding object and returned, and may detect the surrounding object located within the predefined set distance, set vertical angle of view, and set horizontal angle of view range based on specifications thereof. The radar sensor 520 may include a front radar sensor 521, a left radar sensor 521, a right radar sensor 522, and a rear radar sensor 523 installed on the front surface, a left side surface, a right side surface, and the rear surface of the autonomous vehicle, respectively, but the installation locations and the number of installed units thereof are not limited to those in a specific embodiment. The autonomous driving integrated controller 600 may determine the location (including the distance to the corresponding object), the speed, and the moving direction of the corresponding object by analyzing power of the electromagnetic wave transmitted and received via the radar sensor 520.

The camera sensor 530 may detect the surrounding object outside the autonomous vehicle by capturing the surroundings of the autonomous vehicle, and may detect the surrounding object located within the predefined set distance, set vertical field of view, and set horizontal field of view based on specifications thereof.

The camera sensor 530 may include a front camera sensor 531, a left camera sensor 532, a right camera sensor 533, and a rear camera sensor 534 installed on the front surface, the left side surface, the right side surface, and the rear surface of the autonomous vehicle, respectively, but the installation locations and the number of installed units thereof are not limited to those in a specific embodiment. The autonomous driving integrated controller may determine the location (including the distance to the corresponding object), the speed, the moving direction, and the like of the corresponding object by applying predefined image processing to the image captured via the camera sensor 530.

In addition, an internal camera sensor 535 for capturing interior of the autonomous vehicle may be mounted at a predetermined location (e.g., a rearview mirror) inside the autonomous vehicle, and the autonomous driving integrated controller 600 may monitor a behavior and a state of the passenger based on the image obtained via the internal camera sensor 535 and output a guidance or the warning to the passenger via the output unit 300 described above.

In addition to the lidar sensor 510, the radar sensor 520, and the camera sensor 530, the sensing module 500 may further include an ultrasonic sensor 540 as illustrated in FIG. 1, and various types of sensors for detecting the surrounding object of the autonomous vehicle may be further employed in the sensing module 500.

To help understand the present embodiment, FIG. 2 shows an example in which the front lidar sensor 511 or the front radar sensor 521 is installed on the front surface of the autonomous vehicle, the rear lidar sensor 513 or the rear radar sensor 523 is installed on the rear surface of the autonomous vehicle, and the front camera sensor 531, the left camera sensor 532, the right camera sensor 533, and the rear camera sensor 534 are installed on the front surface, the left side surface, the right side surface, and the rear surface of the autonomous vehicle, respectively. However, as described above, the installation locations and the number of installed units of the respective sensors are not limited to those in a specific embodiment.

In addition, the sensing module 500 may further include a bio-sensor for detecting bio-signals of the passenger (e.g., heart rate, electrocardiogram, respiration, blood pressure, body temperature, brain wave, blood flow (pulse wave), blood sugar, and the like) to determine the state of the passenger in the autonomous vehicle. The bio-sensor may include a heart rate sensor, an electrocardiogram sensor, a respiration sensor, a blood pressure sensor, a body temperature sensor, an electroencephalogram sensor, a photoplethysmography sensor, a blood sugar sensor, and the like.

Finally, the sensing module 500 additionally adds a microphone 550, and an internal microphone 551 and an external microphone 552 are used for different purposes.

The internal microphone 551 may be used, for example, to analyze a voice of the passenger in the autonomous vehicle 1000 based on AI or the like or to immediately respond to a direct voice command.

On the other hand, the external microphone 552 may be used for analyzing various sounds generated from the outside of the autonomous vehicle 1000 using various analysis tools such as deep learning and responding appropriately thereto for safe travel or the like.

For reference, components shown in FIG. 2 may perform the same or similar functions as those shown in FIG. 1, and FIG. 2 illustrates relative positional relationships of the components (based on the interior of the autonomous vehicle 1000) in more detail compared to FIG. 1.

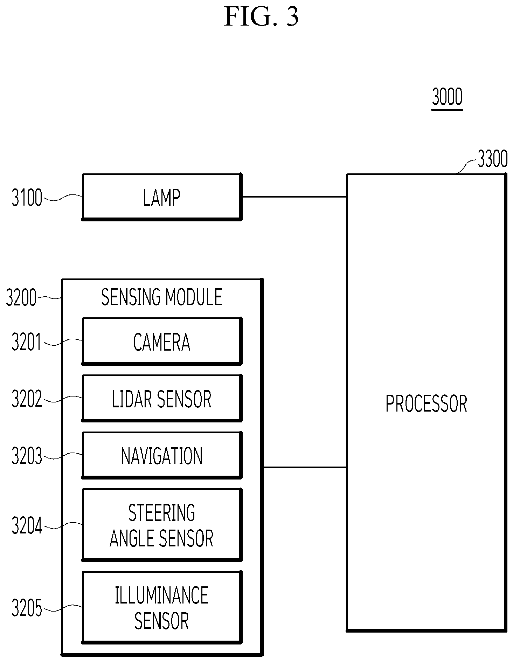

FIG. 3 shows a lamp control system according to embodiments.

A sensing module 3200 shown in FIG. 3 may correspond to the sensing module 500 or the like shown in FIG. 1. A processor 3300 shown in FIG. 3 may correspond to the autonomous driving integrated controller 600 shown in FIG. 1.

Referring to FIG. 3, a lamp control system 3000 according to embodiments may include a lamp 3100, the sensing module 3200, and the processor 3300.

The lamp 3100, as a kind of output unit that irradiates a beam in a forward direction of the vehicle based on a beam pattern, may include a pair of lamps. More specifically, the lamp 3100 may be a kind of a headlamp, composed of a pair of headlamps on left and right portions of the front surface of the vehicle. In general, the headlamp or a headlight may include a low beam, a high beam, a turn signal, a daytime running light, a side light, and the like. It may be preferable that the lamp 3100 controlled by the processor 3300 of the lamp control system 3000 according to embodiments corresponds to the high beam among those.

The sensing module 3200 may sense whether there is an object ahead in front of the traveling vehicle and a type of road on which the vehicle is currently traveling. That is, the sensing module 3200 may sense the object located in front of the traveling vehicle and deliver/transmit the sensed object information to the processor 3300. The object may be a moving object or a static object located in front of the traveling vehicle, and may be, for example, a preceding vehicle, a preceding bicycle, a preceding motorcycle, and the like. In addition, the sensing module 3200 may sense the type or a shape of the road on which the vehicle is currently traveling, and deliver/transmit road information on the sensed type or shape of the road to the processor 3300.

For example, the sensing module 3200 may include a camera 3201 that detects the surrounding object outside the vehicle by capturing the surroundings of the vehicle, a lidar sensor 3202 that detects the surrounding object outside the vehicle by transmitting the laser signal to the surroundings of the vehicle and receiving the signal that is reflected from the corresponding object and returned, or a radar sensor that detects the surrounding object outside the vehicle by emitting the electromagnetic wave to the surroundings of the vehicle and receiving the signal that is reflected from the corresponding object and returned. More specifically, the camera 3201 may detect the object located in front of the vehicle, and the camera 3201 may correspond to the front camera sensor 531 in FIGS. 1 and 2. In addition, more specifically, the lidar sensor 3202 may detect the object located in front of the vehicle, and the lidar sensor 3202 may correspond to the front lidar sensor 511 in FIGS. 1 and 2. In addition, more specifically, the radar sensor may detect the object located in front of the vehicle, and the radar sensor may correspond to the front radar sensor 521 in FIGS. 1 and 2.

Alternatively, the sensing module 3200 may sense the information on the road on which the vehicle is traveling. That is, the sensing module 3200 may sense the type or the shape of the road on which the vehicle is currently traveling, and deliver/transmit the road information on the sensed type or shape of the road to the processor 3300.

For example, the sensing module 3200 may include the camera 3201 that senses the type or the shape of the road, such as sensing whether the road on which the vehicle is traveling is a straight road or a curved road or sensing whether the road is an unpaved road or a paved road, or a navigation 3203 that senses a traveling location of the vehicle and senses the type or the shape of the road on which the vehicle is traveling based on the traveling location. More specifically, the camera 3201 may capture the road on which the vehicle is traveling and sense the type or the shape of the road, and the camera 3201 may correspond to the camera sensor 530 in FIGS. 1 and 2. In addition, more specifically, the navigation 3203 may sense the traveling location of the vehicle and sense the type or the shape of the road on which the vehicle is traveling based on the traveling location, and the navigation 3203 may correspond to the GPS receiver 260 in FIG. 1 and FIG. 2.

Alternatively, the sensing module 3200 may sense brightness information of the road on which the vehicle is traveling. That is, the sensing module 3200 may sense presence or absence of a streetlight on the road on which the vehicle is currently traveling or a brightness level of light outside the vehicle, and deliver/transmit the sensed road brightness information to the processor 3300.

For example, the sensing module 3200 may include the camera 3201 that senses the type or the shape of the road, such as sensing whether the road is the unpaved road or the paved road or whether there is the streetlight on the road, or the navigation 3203 that senses the traveling location of the vehicle and senses the type or the shape of the road on which the vehicle is traveling based on the traveling location. In addition, for example, the sensing module 3200 may include an illuminance sensor that senses the brightness level of light outside the vehicle. The illuminance sensor may be located outside the vehicle to sense external illuminance. More specifically, the camera 3201 may capture the road on which the vehicle is traveling and sense the type or the shape of the road, and the camera 3201 may correspond to the camera sensor 530 in FIGS. 1 and 2. In addition, more specifically, the navigation 3203 may sense the traveling location of the vehicle and sense the type or the shape of the road on which the vehicle is traveling based on the traveling location, and the navigation 3203 may correspond to the GPS receiver 260 in FIGS. 1 and 2.

Alternatively, the sensing module 3200 may sense steering information of the vehicle, more specifically, steering angular velocity information of the steering wheel. That is, the sensing module 3200 may sense the steering angle or a steering angular velocity formed as the driver manipulates the steering wheel, and deliver/transmit the sensed steering angular velocity information to the processor 3300.

For example, the sensing module 3200 may include a steering angle sensor 3204 that senses the steering angle or the steering angular velocity formed as the driver manipulates the steering wheel. More specifically, the steering angle sensor 3204 may sense the steering angle or the steering angular velocity of the wheel, and the steering angle sensor 3204 may correspond to the steering angle sensor 210 in FIGS. 1 and 2.

Alternatively, the sensing module 3200 may sense illuminance information outside the vehicle. That is, the sensing module 3200 may sense the brightness of light outside the vehicle, and deliver/transmit the sensed brightness information of light to the processor 3300.

For example, the sensing module 3200 may include an illuminance sensor 3205 that senses illuminance of the outside of the vehicle. The illuminance sensor 3205 may be located outside the vehicle to sense the external illuminance.

Alternatively, the sensing module 3200 may sense travel direction information of the sensed object located in front of the vehicle. That is, the sensing module 3200 may sense a travel direction of the sensed object ahead located in front of the vehicle, and deliver/transmit the sensed travel direction information to the processor 3300.

For example, the sensing module 3200 may include the camera 3201 that detects the surrounding object outside the vehicle by capturing the surroundings of the vehicle to, the lidar sensor 3202 that detects the surrounding object outside the vehicle by transmitting the laser signal to the surroundings of the vehicle and receiving the signal that is reflected from the corresponding object and returned, or the radar sensor that detects the surrounding object outside the vehicle by emitting the electromagnetic wave to the surroundings of the vehicle and receiving the signal that is reflected from the corresponding object and returned. More specifically, the camera 3201 may detect the object located in front of the vehicle, and the camera 3201 may correspond to the front camera sensor 531 in FIGS. 1 and 2. In addition, more specifically, the lidar sensor 3202 may detect the object located in front of the vehicle, and the lidar sensor 3202 may correspond to the front lidar sensor 511 in FIGS. 1 and 2. Further, more specifically, the radar sensor may detect the object located in front of the vehicle, and the radar sensor may correspond to the front radar sensor 521 in FIGS. 1 and 2.

Alternatively, the sensing module 3200 may sense the current travel state information of the vehicle. That is, the sensing module 3200 may sense whether the vehicle is currently traveling or stopped/stationary, and deliver/transmit the sensed travel state information of the vehicle to the processor 3300.

For example, the travel state information may include the various information indicating the travel state and the behavior of the autonomous vehicle, such as the steering angle formed by the passenger manipulating the steering wheel, the accelerator pedal stroke or the brake pedal stroke generated by pressing the accelerator pedal or the brake pedal, and the behavior of the autonomous vehicle including the vehicle speed, the acceleration, the yaw, the pitch, and the roll, as described in FIGS. 1 and 2. Further, the sensing module 3200 that senses the travel state information may include the steering angle sensor 210, the accel position sensor (APS)/pedal travel sensor (PTS) 220, the vehicle speed sensor 230, the acceleration sensor 240, and the yaw/pitch/roll sensor 250 illustrated in FIGS. 1 and 2.

The sensing module 3200 and the processor 3300 may be connected to each other via an interface unit. That is, the interface unit may deliver/transmit the information on the object in front of the vehicle, the road information of the vehicle, the steering angular velocity information of the vehicle, the external illuminance information of the vehicle, and/or the current travel state information of the vehicle sensed by the sensing module 3200 to the processor 3300. Additionally, the interface unit may also deliver/transmit a state of the lamp 3100 to the processor 3300.

The processor 3300 may receive the information on the object located in front of the traveling vehicle sensed by the sensing module 3200, and control the beam pattern of the lamp 3100 such that a shadow area is formed in an area including the object based on the input object information. That is, when the object is present in front of the traveling vehicle, the processor 3300 may control the beam pattern of the lamp 3100 such that the lamp 3100 does not irradiate the beam to the area including the object.

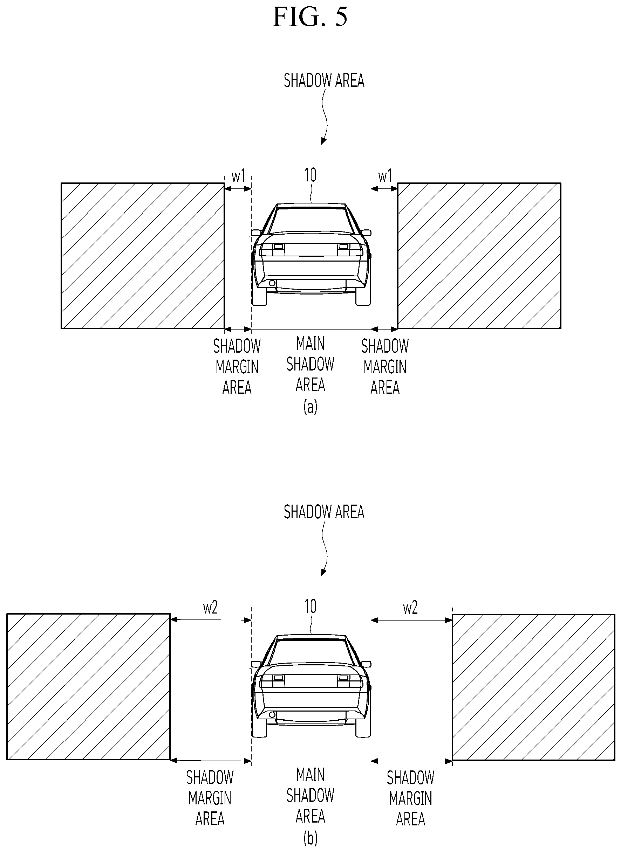

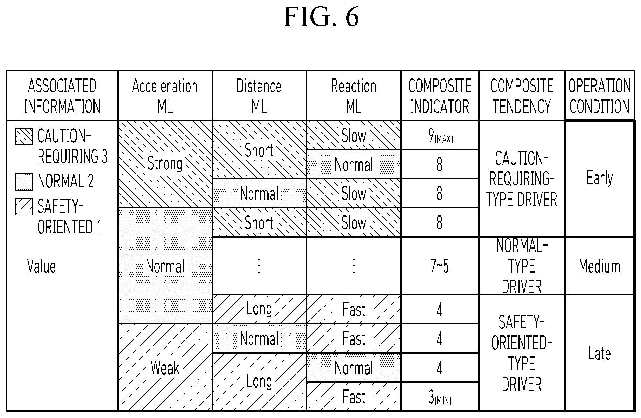

The processor 3300 may control a width of the shadow area formed based on internal factors, external factors, and/or combinations thereof. The internal factors may correspond to driver's travel tendency information, and the external factors may correspond to environmental information, vehicle information, and the like other than driver's travel tendency information. A more detailed description will be given with reference to FIGS. 5 and 6.

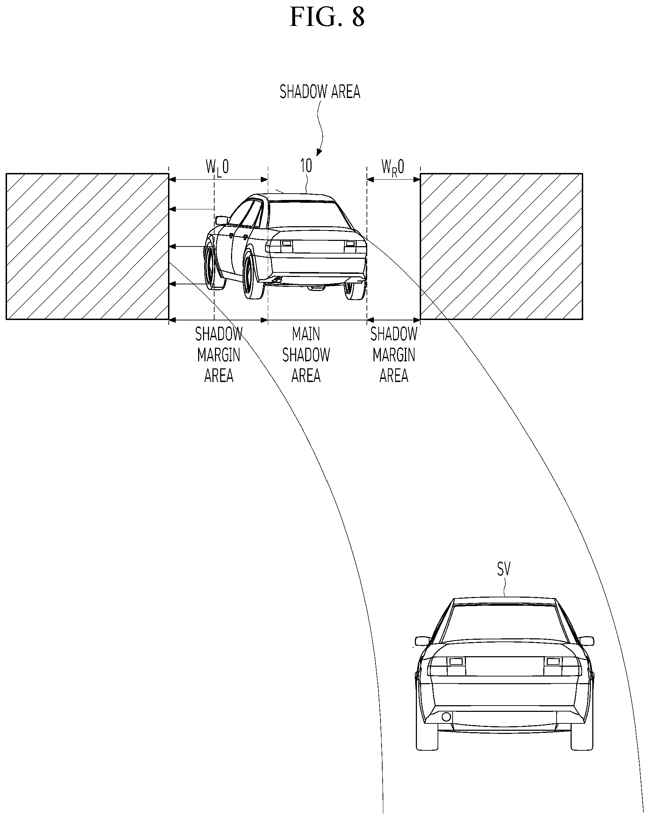

In addition, the processor 3300 may receive the information on the road on which the vehicle is traveling sensed by the sensing module 3200, and control one of a width of a left area and a width of a right area of the shadow area formed based on the received road information. More specifically, the processor 3300 may control one of the width of the left area and the width of the right area of the shadow area when the road on which the vehicle is traveling is a curved road. A more detailed description will be given with reference to FIG. 8.

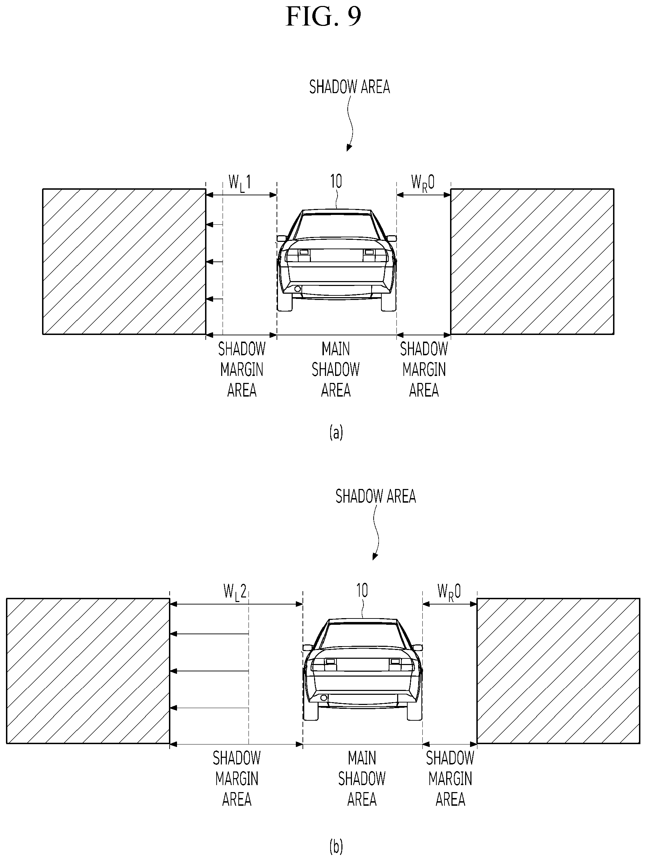

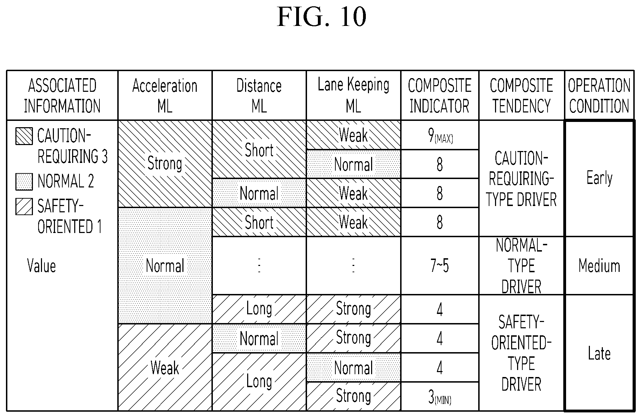

The processor 3300 may control the width of the formed shadow area based on the internal factors, the external factors, and/or the combinations thereof. In particular, the processor 3300 may variably control the width of the left area and the width of the right area of the shadow area based on the internal factors, the external factors, and/or the combinations thereof. The internal factors may correspond to the driver's travel tendency information, and the external factors may correspond to the environmental information, the vehicle information, and the like other than the driver's travel tendency information. A more detailed description will be given with reference to FIGS. 9 and 10.

Additionally, the processor 3300 may control the beam pattern of the lamp 3100 to a specific beam pattern such that an irradiation distance, a width, and/or a combination thereof of the beam irradiated by the lamp 3100 may be varied. That is, the processor 3300 may variably control the irradiation distance or the width of the beam irradiated by the lamp 3100 eventually by controlling the beam pattern.

According to embodiments, the processor 3300 may control the beam pattern of the lamp 3100 to the specific beam pattern when the vehicle is currently in the autonomous driving mode or a semi-autonomous driving mode. The processor 3300 may receive delivered/transmitted information on whether the driving mode of the vehicle is the autonomous driving mode/semi-autonomous driving mode/manual driving mode. As described with reference to FIGS. 1 and 2, the processor 3300 may obtain the driving information based on the passenger's manipulation of the user input unit 100 in the autonomous driving mode or the manual driving mode of the autonomous vehicle via the driving information input interface 101. The user input unit 100 may include the driving mode switch 110 and the control panel 120 (e.g., the navigation terminal mounted in the autonomous vehicle, the smart phone or the tablet PC carried by the passenger, and the like) as illustrated in FIG. 1, and thus, the driving information may include the driving mode information and the navigation information of the autonomous vehicle.

For example, the driving mode (i.e., autonomous driving mode/manual driving mode or sports mode/eco mode/safe mode/normal mode) of the autonomous vehicle determined based on the passenger's manipulation of the driving mode switch 110 may be delivered/transmitted to the processor 3300 as the driving information via the driving information input interface 101.

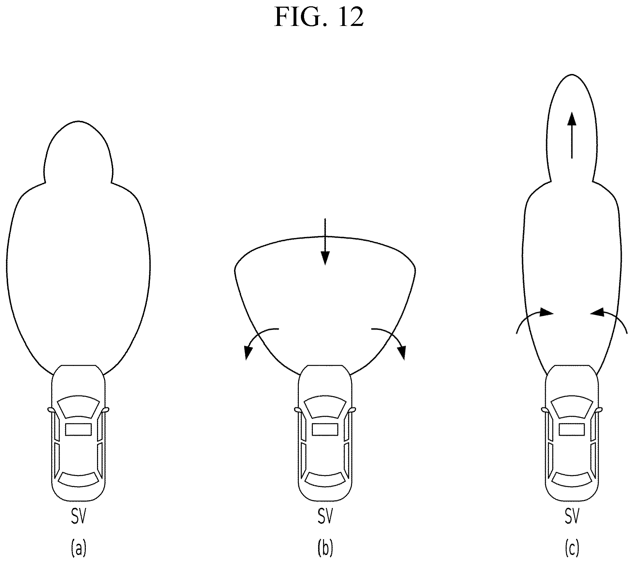

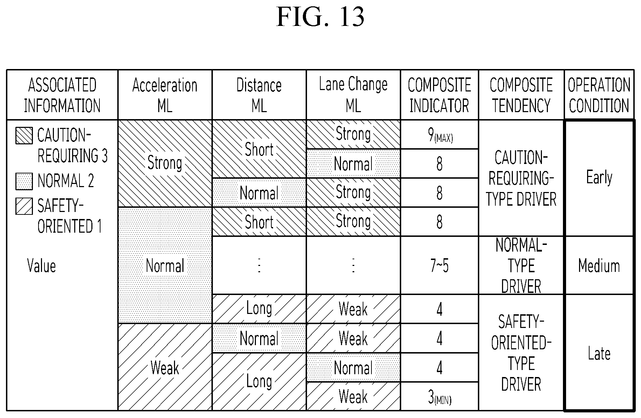

The processor 3300 may control the beam pattern of the lamp 3100 to the specific beam pattern based on the internal factors, the external factors, and/or the combinations thereof. The internal factors may correspond to the driver's travel tendency information, and the external factors may correspond to the environmental information, the vehicle information, and the like other than the driver's travel tendency information. A more detailed description will be given with reference to FIGS. 12 and 13.

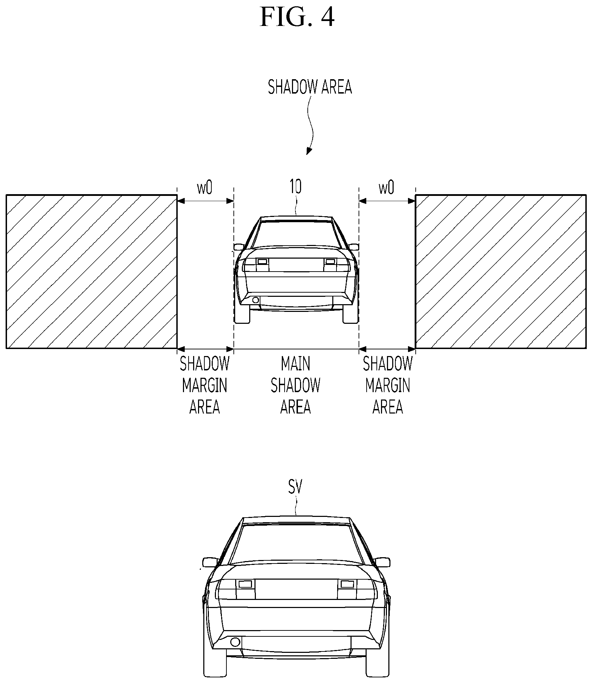

FIG. 4 shows a shadow area formed by a lamp control system according to embodiments.

A subject vehicle SV illustrated in FIG. 4 is a vehicle equipped with the lamp control system 3000. The lamp control system 3000 may correspond to the lamp control system 3000 in FIG. 3, and the vehicle may correspond to the vehicle in FIGS. 1 and 2.

FIG. 4 is a view illustrating a shadow area formed by the processor 3300 when a preceding vehicle 10 is present in front of the subject vehicle (hereinafter, referred to as 'SV').

Referring to FIG. 4, when the preceding vehicle 10 is located in front of the SV, the processor 3300 may control the beam pattern of the lamp 3100 such that the shadow area is formed in an area including the preceding vehicle 10. That is, when the object is located in front of the vehicle, the lamp control system 3000 according to embodiments may prevent glare of the object located ahead by controlling the beam pattern of the lamp 3100 such that the lamp 3100 does not irradiate the beam to the area where the object is located.

More specifically, the shadow area may be composed of a main shadow area corresponding to a width of the object and a shadow margin area located on both sides of the main shadow area to have a certain width.

In this regard, the main shadow area may mean the area where the object is present. The shadow margin area is not the area where the object is present, but is able to be an extra area set above, below, to the left of, and to the right of the main shadow area to prevent the glare of the object. That is, the shadow area is composed not only of the main shadow area where the object is present, but also of the extra shadow margin area on both sides of the main shadow area to prevent the glare of the object because the object may move left and right, thereby alleviating the glare of the object.

Referring to FIG. 4, the shadow area may include the main shadow area where the preceding vehicle 10 is present and the shadow margin area where the preceding vehicle 10 is not present. The main shadow area may have a width corresponding to a width of the preceding vehicle 10, and the shadow margin area may have a certain width w0 from each of both sides of the main shadow area. The shadow margin area may be present on left and right sides of the main shadow area, and a width of a left shadow zone margin area and a width of a right shadow zone margin area may be equal to each other.

As described in FIG. 3, the processor 3300 may control the width of the shadow area based on the internal factors, the external factors, and/or the combinations thereof. More specifically, the processor 3300 may control the width of the shadow margin area based on the internal factors, the external factors, and/or the combinations thereof. That is, the processor 3300 may adjust the width of the shadow margin area, which was additionally set to prevent the glare of the object, to be great or small depending on the internal factors or the external factors. A more detailed description will be described with reference to FIGS. 5 and 6.

FIG. 5 shows lamp control of a vehicle according to embodiments. FIG. 6 shows examples of internal factors of a lamp control system according to embodiments.

FIG. 5 is a view showing a state in which the SV in FIG. 4 controls the lamp. The preceding vehicle 10 illustrated in FIG. 5 may correspond to the preceding vehicle 10 illustrated in FIG. 4.

Referring to (a) and (b) in FIG. 5, the processor 3300 may control the width of the shadow margin area such that the shadow margin area has a first width w1 or a second width w2. The first width w1 may be smaller than the predetermined width w0 (see FIG. 4) of the shadow margin area set by the processor 3300, and the second width w2 may be greater than the predetermined width w0.

As described in FIG. 4, the shadow margin area is the area set as the extra area in addition to the main shadow area to prevent the glare of the object located ahead. As the shadow margin area is set greater, the glare of the object located ahead may be alleviated/prevented, but visibility of the driver may be reduced. Alternatively, on the contrary, as the shadow margin area is set smaller, the visibility of the driver may increases, but the glare of the object located ahead may not be alleviated/prevented.

Therefore, the lamp control system 3000 according to embodiments may provide the width of the shadow margin area optimized for driver's tendency or a situation during the travel by adjusting the width of the shadow margin area to be smaller or greater than the width set by default based on the driver's travel tendency information, the environmental information, the vehicle information, and the like.

For example, the processor 3300 may adjust the width of the shadow margin area to the first width w1 or the second width w2 based on the internal factors. The internal factors may be, for example, the driver's travel tendency information as described in FIG. 3.

Referring to FIG. 6 together, the internal factors may include driver's acceleration tendency information, driver's safe distance tendency information, or driver's reaction speed tendency information. processor 3300 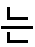 driver's acceleration tendency information, driver's safe distance tendency information, The processor 3300 may analyze the internal factors, that is, a driver's travel tendency, based on the driver's acceleration tendency information, the driver's safe distance tendency information, the driver's reaction speed tendency information, and/or combinations thereof. The analyzed internal factors may be stored in the memory described in FIGS. 1 and 2.

For example, the processor 3300 may categorize the driver's travel tendencies into caution-requiring type/normal type/safety-oriented type as illustrated in FIG. 6. When determining that analyzed driver's travel tendency corresponds to the caution-requiring type or the safety-oriented type, the processor 3300 may control the width of the shadow margin area.

For example, when the driver's travel tendency corresponds to the caution-requiring type, it may mean that the driver has a strong tendency to accelerate, has a short safe distance from the preceding vehicle, and has a low reaction speed to a surrounding situation. Therefore, in this case, because a driver's traveling behavior may be more variable or dynamic than that of a driver in the normal type, the processor 3300 may control the width of the shadow margin area to be relatively great. For example, as shown in (b) in FIG. 5, the processor 3300 may control the width of the shadow margin area to the second width w2 that is greater than the predetermined width w0 (see FIG. 4) of the shadow margin area set by default.

Alternatively, for example, when the driver's travel tendency corresponds to the safety-oriented type, it may mean that the driver has a weak tendency to accelerate, has a long safe distance from the preceding vehicle, and has a high reaction speed to the surrounding situation. Therefore, in this case, because the driver's traveling behavior may be more static than that of the driver in the normal type, the processor 3300 may control the width of the shadow margin area to be relatively small. For example, as shown in (a) in FIG. 5, the processor 3300 may control the width of the shadow margin area to the first width w1 that is smaller than the predetermined width w0 (see FIG. 4) of the shadow margin area set by default.

Alternatively, for example, when the driver's travel tendency corresponds to the normal type, it may mean that the driver has a normal tendency to accelerate, has a normal safe distance from the preceding vehicle, and has a normal reaction speed to the surrounding situation. Therefore, when the driver's travel tendency corresponds to the normal type, the processor 3300 may control the width of the shadow margin area to the predetermined width w0 (see FIG. 4) of the shadow margin area set by default.

Therefore, the lamp control system 3000 according to embodiments may efficiently control the width of the shadow area, more specifically, the width of the shadow margin area, based on the driver's tendency.

In addition, the processor 3300 may adjust the width of the shadow margin area to the first width w1 or the second width w2 based on the external factors. The external factors may include the information on the road on which the vehicle is traveling, the steering angular velocity information of the vehicle, and/or the external illuminance information of the vehicle sensed by the sensing module 3200, as described in FIG. 3. The processor 3300 may analyze the external factors based on the information on the road on which the vehicle is traveling, the steering angular velocity information of the vehicle, the external illuminance information of the vehicle, and/or combinations thereof. The analyzed external factors may be stored in the memory described in FIGS. 1 and 2.

For example, when determining that the road on which the vehicle is traveling corresponds to a specific road based on the information on the road on which the vehicle is traveling, the processor 3300 may control the width of the shadow area. More specifically, the processor 3300 may control the width of the shadow margin area in this case.

That is, when determining that the road on which the vehicle is currently traveling corresponds to the specific road, the processor 3300 may adjust the width of the shadow margin area to the first width w1 or the second width w2. The specific road may correspond to a road with a high risk of accidents because of the glare, such as a road without the streetlight.

The processor 3300 may receive the road information on the type or the shape of the road sensed by the sensing module 3200. Referring to FIG. 3, for example, the camera 3201 may capture the road on which the vehicle is traveling and sense the type or the shape of the road, and the navigation 3203 may sense the traveling location of the vehicle and sense the type or the shape of the road on which the vehicle is traveling based on the traveling location. The camera 3201 or the navigation 3203 may deliver/transmit the road information on the sensed type or shape of the road to the processor 3300.

Accordingly, the processor 3300 may control the width of the shadow margin area when the road on which the vehicle is traveling is the specific road that is set as having the high risk of accidents, such as a road without or with insufficient streetlights, based on the input road information. Preferably, to prevent the glare damage to the object, the processor 3300 may control the width of the shadow margin area to the second width w2 that is greater than the predetermined width w0 (see FIG. 4) of the shadow margin area set by default, as shown in (b) in FIG. 5.

Alternatively, for example, when determining that a steering angular velocity value of the vehicle is equal to or greater than a reference angular velocity value based on the steering angular velocity information of the vehicle, the processor 3300 may control the width of the shadow area. More specifically, the processor 3300 may control the width of the shadow margin area in this case.

That is, when determining that the current steering angle or steering angular velocity of the vehicle has a value greater than a reference angle or the reference angular velocity, the processor 3300 may adjust the width of the shadow margin area to the first width w1 or the second width w2. The reference angle or the reference angular velocity may correspond to a steering angle or a steering angular velocity of the steering wheel that basically occurs when the driver makes a sharp right or left turn.

The processor 3300 may receive the steering angular velocity information on the steering angle or the steering angular velocity of the steering wheel sensed by the sensing module 3200. Referring to FIG. 3 together, for example, the steering angle sensor 3204 may sense the steering angle or the steering angular velocity of the wheel, and deliver/transmit the steering angular velocity information on the sensed steering angle or steering angular velocity of the wheel to the processor 3300.

Therefore, when the input steering angle information corresponds to a value equal to or greater than the reference angular velocity value, the processor 3300 may determine that there is a high risk of accidents because of glare to other party as in a case in which the road on which the vehicle is traveling is a road with a great curvature or the driver changes a driving direction abruptly, and control the width of the shadow margin area. Preferably, to prevent the glare damage to the object, the processor 3300 may control the width of the shadow margin area to the second width w2 that is greater than the predetermined width w0 (see FIG. 4) of the shadow margin area set by default, as shown in (b) in FIG. 5.

Alternatively, for example, when determining that an external illuminance value of the vehicle is equal to or smaller than a reference illuminance value based on the external illuminance information of the vehicle, the processor 3300 may control the width of the shadow area. More specifically, the processor 3300 may control the width of the shadow margin area in this case.

That is, when determining that the current external illuminance value of the vehicle is smaller than the reference illuminance value, the processor 3300 may adjust the width of the shadow margin area to the first width w1 or the second width w2. The reference illuminance value may be an illuminance value corresponding to a late-night time zone, which is a time zone in which the glare damage to the other party is highly likely to occur.

The processor 3300 may receive the external illuminance information of the vehicle sensed by the sensing module 3200, that is, brightness information of light outside the vehicle. Referring to FIG. 3, for example, the illuminance sensor 3205 may sense the brightness level of light outside the vehicle, and deliver/transmit illuminance information on the sensed brightness level of light to the processor 3300.

Accordingly, when the external illuminance value of the vehicle is equal to or lower than the reference illuminance value based on the input illuminance information, the processor 3300 may determine that a time zone in which the vehicle is currently traveling is the late-night time zone or the like in which there is a high risk of accidents resulted from the glare to the other party, and may control the width of the shadow margin area. Preferably, to prevent the glare damage to the object, the processor 3300 may control the width of the shadow margin area to the second width w2 that is greater than the predetermined width w0 (see FIG. 4) of the shadow margin area set by default, as illustrated in (b) in FIG. 5.

Therefore, the lamp control system 3000 according to embodiments may efficiently control the width of the shadow area, more specifically, the width of the shadow margin area, based on the environmental information or the vehicle information such as the information on the road on which the vehicle is currently traveling, the time zone in which the vehicle is currently traveling, and the current abrupt direction change of the driver.

In addition, the processor 3300 is configured to control the beam pattern of the lamp 3100 to temporarily control the width of the shadow area, more specifically, the width of the shadow margin area, and to restore the original width of the shadow area after a certain period of time elapses.

That is, the processor 3300 may control the beam pattern of the lamp 3100 such that the width of the shadow margin area corresponds to the first width w1 or the second width w2 that is smaller or greater than the predetermined width w0 (see FIG. 4) of the shadow margin area set by default, based on the internal factors, the external factors, and/or the combinations thereof, as shown in (a) and (b) in FIG. 5.

In this regard, the processor 3300 may control the beam pattern of the lamp 3100 such that the width of the shadow margin area temporarily corresponds to the second width w2, and corresponds to the predetermined width w0 (see FIG. 4) of the shadow margin area set by default after a certain period of time elapses. In other words, when controlling the lamp 3100 such that the width of the shadow margin area is greater than the predetermined width w0 (see FIG. 4) of the shadow margin area set by default to prevent the glare of the object, the processor 3300 may control the width of the shadow margin area to be temporarily great and then restore the original width after a certain period of time elapses.

The processor 3300 may temporarily control the beam pattern of the lamp 3100 such that the width of the shadow margin area corresponds to the second width w2 based on the internal factors, the external factors, and/or the combinations thereof. For example, when determining that the situation during the travel corresponds to the situation in which there is the high risk of accidents resulted from the glare to the other party based on the information on the road on which the vehicle is traveling, the steering angular velocity information of the vehicle, and the external illuminance information of the vehicle, the processor 3300 may temporarily control the beam pattern of the lamp 3100 such that the width of the shadow margin area corresponds to the second width w2 that is greater than the predetermined width w0 (see FIG. 4) of the shadow margin area set by default.

Further, the processor 3300 is configured to control the beam pattern of the lamp 3100 such that the width of the shadow margin area corresponds to the predetermined width w0 (see FIG. 4) of the shadow margin area set by default after a specific period of time elapses. In this regard, the specific period of time is set based on the internal factors, the external factors, and/or the combinations thereof.

For example, referring to FIG. 6 together, when determining that the driver's travel tendency corresponds to the safety-oriented type based on the internal factors, the processor 3300 may set the specific period of time to be relatively short. Alternatively, for example, when determining that the driver's travel tendency corresponds to the caution-requiring type based on the internal factors, the processor 3300 may set the specific period of time to be relatively long.

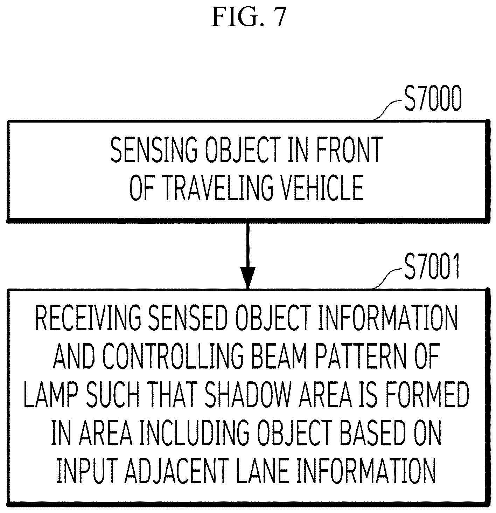

FIG. 7 shows a lamp control method according to embodiments.

FIG. 7 shows a method in which the vehicle in FIGS. 1 and 2 and the lamp control system 3000 in FIG. 3 control the lamp based on the autonomous driving integrated controller 600 in FIGS. 1 and FIG. 2, the processor 3300 in FIG. 3, and the like.

Referring to FIG. 7, the lamp control method according to embodiments may include a step (S7000) of sensing the object in front of the traveling vehicle, and a control step (S7001) of receiving the sensed object information and controlling the beam pattern of the lamp such that the shadow area is formed in the area including the object based on input adjacent lane information. The control step (S7001) may include controlling the width of the shadow area based on the internal factors, the external factors, and/or the combinations thereof.

The sensing step (S7000) may be performed by the sensing module 3200 of the lamp control system 3000, and the control step (S7001) may be performed by the processor 3300 of the lamp control system 3000.

FIG. 8 shows a shadow area formed by a lamp control system according to embodiments when a vehicle is traveling on a curved road.

The subject vehicle SV illustrated in FIG. 8 is the vehicle equipped with the lamp control system 3000. The lamp control system 3000 may correspond to the lamp control system 3000 in FIG. 3, and the vehicle may correspond to the vehicle in FIGS. 1 and 2.

FIG. 8 is a view illustrating the shadow area formed by the processor 3300 when the preceding vehicle 10 is present in front of the subject vehicle (hereinafter, referred to as 'SV') and the SV is traveling on the curved road.

As described in FIG. 4, when the preceding vehicle 10 is located in front of the SV, the processor 3300 may control the beam pattern of the lamp 3100 such that the shadow area is formed in the area including the preceding vehicle 10. In this regard, when determining that the road on which the SV is traveling corresponds to the curved road based on the input road information, the processor 3300 may control the width of the left area or the width of the right area of the shadow area. More specifically, the processor 3300 may control a left side width or a right side width of the shadow margin area.

FIG. 8 shows that the preceding vehicle 10 and the SV are traveling on a curved road that is bent to the left. Referring to FIG. 8, when determining that the road on which the SV is traveling corresponds to the curved road that is bent to the left based on the input road information, the processor 3300 may control the left side of the shadow margin area to have a width W_{L}0 (hereinafter, referred to as a "reference left side width") that is greater than the reference width WO. In this regard, the processor 3300 may control the right side of the shadow margin area to have a width equal to the reference width WO or a width WR0 similar to the reference width.

In other words, when the SV is traveling on the curved road that is bent to the left, because the preceding vehicle 10 is also traveling on the curved road that is bent to the left, the processor 3300 may control the width of the left area of the shadow margin area to be relatively greater than the reference width WO to prevent the glare damage to the preceding vehicle 10. More specifically, the processor 3300 may control the width of the left area of the shadow margin area by controlling a beam pattern of a lamp located on a left side of a pair of lamps 3100.

FIG. 8 is an example showing that the SV is traveling on the curved road that is bent to the left. For example, also in a case in which the SV is traveling on a curved road that is bent to the right, when determining that the road on which the SV is traveling corresponds to the curved road that is bent to the right based on the input road information, the processor 3300 may control the right side width of the shadow margin area to be greater than the reference width WO. In this regard, the processor 3300 may control the left side width of the shadow margin area to be equal to or similar to the reference width WO.

In other words, when the SV is traveling on the curved road that is bent to the right, because the preceding vehicle 10 is also traveling on the curved road that is bent to the right, the processor 3300 may control the width of the right area of the shadow margin area to be relatively greater than the reference width WO to prevent the glare damage to the preceding vehicle 10. More specifically, the processor 3300 may control the width of the right area of the shadow margin area by controlling a beam pattern of a lamp located on a right side of the pair of lamps 3100.

As described in FIG. 3, the processor 3300 may receive the information on the road on which the vehicle is traveling, sensed by the sensing module 3200. For example, the camera 3201 may capture the road on which the vehicle is traveling and sense the type or the shape of the road, and the navigation 3203 may sense the traveling location of the vehicle and sense the type or the shape of the road on which the vehicle is traveling based on the traveling location. The camera 3201 or the navigation 3203 may deliver/transmit the road information on the sensed type or shape of the road to the processor 3300.

Therefore, the processor 3300 may determine whether the road on which the vehicle is traveling is the curved road that is bent to the left or the curved road that is bent to the right based on the input road information, and may control a width corresponding thereto of the left and right side widths of the shadow margin area based on the same.

As described in FIG. 3, the processor 3300 may control the width of the shadow area based on the internal factors, the external factors, and/or the combinations thereof. More specifically, the processor 3300 may control the width of the shadow margin area based on the internal factors, the external factors, and/or the combinations thereof. In particular, the processor 3300 may adjust the widths of the left and right sides of the shadow margin area, which were additionally set to prevent the glare of the object ahead, to be greater or smaller based on the internal factors or the external factors. A more detailed description will be given with reference to FIGS. 9 and 10.

FIG. 9 shows lamp control of a vehicle according to embodiments. FIG. 10 shows examples of internal factors of a lamp control system according to embodiments.

FIG. 9 is a view showing a state in which the SV in FIG. 8 controls the lamp. The preceding vehicle 10 shown in FIG. 9 may correspond to the preceding vehicle 10 shown in FIG. 8.

FIG. 9 shows the case in which the SV is traveling on the curved road that is bent to the left, similar to FIG. 8. Therefore, for convenience of description, a following description assumes the case in which the SV is traveling on the curved road that is bent to the left.

Referring to (a) and (b) in FIG. 9, when the SV is traveling on the curved road that is bent to the left, the processor 3300 may control the left side width of the shadow margin area to a first left side width W_{L}1 or a second left side width W_{L}2. Basically, the first left side width W_{L}1 may be smaller than the reference left side width W_{L}0 (see FIG. 8) of the shadow margin area set by the processor 3300, and the second left side width W_{L}2 may be greater than the reference left side width W_{L}0.

As described in FIGS. 4 and 8, the shadow margin area is the area set as the extra area in addition to the main shadow area to prevent the glare of the object located ahead. In particular, when traveling on the curved road, the object ahead may be biased to either the right or left, so that the processor 3300 may control a width of an area corresponding to the side to which the object ahead is biased of the shadow margin area set in advance. In general, as the shadow margin area is set greater, the glare of the object located ahead may be alleviated/prevented, but the visibility of the driver may be reduced. Alternatively, on the contrary, as the shadow margin area is set smaller, the visibility of the driver may be increased, but the glare of the object located ahead may not be alleviated/prevented.

Therefore, the lamp control system 3000 according to embodiments may provide the width of the shadow margin area optimized for the driver's tendency or the situation during the travel by adjusting the width of the shadow margin area to be smaller or greater than the width set by default based on the driver's travel tendency information, the environmental information, the vehicle information, and the like. More specifically, the lamp control system 3000 according to embodiments may provide the width of the shadow margin area optimized for the driver's tendency or the situation during the travel by adjusting a width of an area corresponding to the bias of the vehicle of a front shadow margin area to be smaller or greater than a width set for the case of traveling on the curved road, based on the driver's travel tendency information, the environmental information, the vehicle information, and the like when the vehicle is traveling on the curved road.

For example, the processor 3300 may adjust the width of the shadow margin area from the reference left side width W_{L}0 to the first left side width W_{L}1 or the second left side width W_{L}2 based on the internal factors when the vehicle is traveling on the curved road that is bent to the left. The internal factors may be, for example, the driver's travel tendency information, as described in FIG. 3.

Referring to FIG. 10 together, the internal factors may include the driver's acceleration tendency information, the driver's safe distance tendency information, or driver's lane keeping tendency information. The processor 3300 may analyze the internal factors, that is, the driver's travel tendency, based on the driver's acceleration tendency information, the driver's safe distance tendency information, the driver's lane keeping tendency information, and/or combinations thereof. The analyzed internal factors may be stored in the memory described in FIGS. 1 and 2.

For example, the processor 3300 may categorize the driver's travel tendencies into the caution-requiring type/normal type/safety-oriented type as shown in FIG. 10. When determining that the analyzed driver's travel tendency corresponds to the caution-requiring type or the safety-oriented type, the processor 3300 may control the width of the shadow margin area.

For example, when the driver's travel tendency corresponds to the caution-requiring type, it may mean that the driver has the strong tendency to accelerate, has the short safe distance from the preceding vehicle, and frequently changes the lane when traveling. Therefore, in this case, because the driver's traveling behavior may be more variable or dynamic than that of the driver in the normal type, the processor 3300 may control the width of the shadow margin area to be relatively great. For example, as shown in (b) in FIG. 9, the processor 3300 may control the left side width of the shadow margin area to the second left side width W_{L}2 that is greater than the reference left side width W_{L}0 (see FIG. 5) of the shadow margin area set by default.

Alternatively, for example, when the driver's travel tendency corresponds to the safety-oriented type, it may mean that the driver has the weak tendency to accelerate, has the long safe distance from the preceding vehicle, and maintains the lane when traveling. Therefore, in this case, because the driver's traveling behavior may be more static than that of the driver in the normal type, the processor 3300 may control the width of the shadow margin area to be relatively small. For example, as shown in (a) in FIG. 9, the processor 3300 may control the left side width of the shadow margin area to the first left side width W_{L}1 that is smaller than the reference left side width W_{L}0 (see FIG. 5) of the shadow margin area set by default.

Alternatively, for example, when the driver's travel tendency corresponds to the normal type, it may mean that the driver has the normal tendency to accelerate, has the normal safe distance from the preceding vehicle, and has the normal reaction speed to the surrounding situation. Therefore, when the driver's travel tendency corresponds to the normal type, the processor 3300 may control the left side width of the shadow margin area to the left side width W_{L}0 (see FIG. 8) of the shadow margin area set by default.

Accordingly, the lamp control system 3000 according to embodiments may efficiently control the width of the shadow area, more specifically, the width of the shadow margin area, based on the driver's tendency.

In addition, the processor 3300 may adjust the left side width of the shadow margin area to the first left side width W_{L}1 or the second left side width W_{L}2 depending on the external factors. The external factors may include the brightness information of the road on which the vehicle is traveling, the steering information of the vehicle, and/or the travel direction information of the object ahead sensed by the sensing module 3200, as described in FIG. 3. The processor 3300 may analyze the external factors based on the brightness information of the road on which the vehicle is traveling, the steering information of the vehicle, the travel direction information of the object ahead, and/or the combinations thereof. The analyzed external factors may be stored in the memory described in FIGS. 1 and 2.

For example, when determining that the brightness of the road on which the vehicle is traveling is equal to or lower than a reference brightness based on the brightness information of the road on which the vehicle is traveling, the processor 3300 may control the width of the shadow margin area. More specifically, the processor 3300 may control the width of the shadow margin area (the left side width of the shadow margin area in the case of FIG. 9) in this case.

That is, when determining that the brightness of the road on which the vehicle is currently traveling is equal to or lower than the reference brightness, the processor 3300 may adjust the left side width of the shadow margin area to the first left side width W_{L}1 or the second left side width W_{L}2, as shown in FIG. 9.

The processor 3300 may receive the brightness information of the road on which the vehicle is traveling, sensed by the sensing module 3200. Referring to FIG. 3, for example, the camera 3201 or the navigation 3203 may sense the type or the shape of the road, such as whether the road on which the vehicle is traveling is the unpaved road or the paved road or whether there is the streetlight on the road, and the illuminance sensor may sense the brightness level of light outside the vehicle. The information on the type or the shape of the road sensed by the camera 3201 or the navigation 3203 may be delivered/transmitted to the processor 3300, and the processor 3300 may determine the brightness information of the road based on the information on the type or the shape of the road. Alternatively, the brightness information of light outside the vehicle sensed by the illuminance sensor may be delivered/transmitted to the processor 3300, and the processor 3300 may determine the brightness information of the road based on the brightness information of outside light.

Therefore, when determining that the road on which the vehicle is traveling is the road without or with insufficient streetlights, which has the high risk of accidents, based on the input road brightness information, the processor 3300 may control the width of the shadow margin area. Preferably, to prevent the glare damage to the object, the processor 3300 may control the left side width of the shadow margin area to the second left side width W_{L}2 that is greater than the reference left side width W_{L}0 (see FIG. 8) of the shadow margin area set by default, as shown in (b) in FIG. 9.

Alternatively, for example, when determining that the steering angular velocity value or the steering angle value of the vehicle is equal to or greater than a reference value based on the steering information of the vehicle, the processor 3300 may control the width of the shadow area. More specifically, the processor 3300 may control the width of the shadow margin area (the left side width of the shadow margin area in the case of FIG. 9) in this case.

That is, when determining that the current steering angle or steering angular velocity of the vehicle has the value greater than the reference angle or the reference angular velocity, the processor 3300 may adjust the left side width of the shadow margin area to the first left side width W_{L}1 or the second left side width W_{L}2 as shown in FIG. 9. The reference angle or the reference angular velocity may correspond to the steering angle or the steering angular velocity of the steering wheel that basically occurs when the driver makes the sharp right or left turn.

The processor 3300 may receive the steering angular velocity information on the steering angle or the steering angular velocity of the steering wheel sensed by the sensing module 3200. Referring to FIG. 3 together, for example, the steering angle sensor 3204 may sense the steering angle or the steering angular velocity of the wheel, and deliver/transmit the steering angular velocity information on the sensed steering angle or steering angular velocity of the wheel to the processor 3300.

Therefore, when the input steering angle information corresponds to the value equal to or greater than the reference angular velocity value, the processor 3300 may determine that there is the high risk of accidents because of the glare to the other party, as in the case in which the road on which the vehicle is traveling is the road with the great curvature or the driver changes the driving direction abruptly, and control the width of the shadow margin area. Preferably, to prevent the glare damage to the object, the processor 3300 may control the left side width of the shadow margin area to the second left side width W_{L}2 that is greater than the reference left side width W_{L}0 (see FIG. 8) of the shadow margin area set by default, as shown in (b) in FIG. 9.

Alternatively, for example, when determining that the travel direction of the object ahead corresponds to the same direction as the travel direction of the vehicle based on the travel direction information of the object ahead, the processor 3300 may control the width of the shadow area. More specifically, the processor 3300 may control the width of the shadow margin area (the left side width of the shadow margin area in the case of FIG. 9) in this case.

That is, when determining that the object ahead 10 for which the shadow area is formed has the same travel direction as the vehicle, that is, corresponds to a preceding object, as illustrated in FIG. 6, the processor 3300 may adjust the left side width of the shadow margin to the first left side width W_{L}1 or the second left side width W_{L}2.

The processor 3300 may receive the travel direction information of the object ahead sensed by the sensing module 3200. Referring to FIG. 3 together, for example, the camera 3201, the lidar sensor 3202, or the radar sensor may sense the travel direction of the object ahead, and deliver/transmit the sensed travel direction information to the processor 3300.

Therefore, when the travel direction of the object ahead is the same as the travel direction of the vehicle based on the input travel direction information of the object ahead, the processor 3300 may determine that the sensed object ahead is the preceding object and thus has the high risk of accidents resulted from the glare, and control the width of the shadow margin area. Preferably, to prevent the glare damage to the object, the processor 3300 may control the left side width of the shadow margin area to the second left side width W_{L}2 that is greater than the reference left side width W_{L}0 (see FIG. 5) of the shadow margin area set by default, as shown in (b) in FIG. 9.

Therefore, the lamp control system 3000 according to embodiments may efficiently control the width of the shadow area, more specifically, the width of the shadow margin area, based on the environmental information or the vehicle information, such as the brightness information of the road on which the vehicle is currently traveling, the current abrupt direction change of the driver, and whether the object ahead is the preceding object or an opposing object.

Although the case in which the SV is traveling on the curved road that is bent to the left has been described with reference to FIG. 9, the principle will be the same when the SV is traveling on the curved road that is bent to the right.

In addition, the processor 3300 is configured to temporarily control the width of the shadow area, more specifically, the width of the shadow margin area, and control the beam pattern of the lamp 3100 to restore the original width of the shadow area after a certain period of time elapses.

That is, the processor 3300 may control the beam pattern of the lamp 3100 (more specifically, the beam pattern of the lamp located on the left side of the pair of lamps 3100) such that the left side width of the shadow margin area corresponds to the first left side width W_{L}1 or the second left side width W_{L}2 that is smaller or greater than the reference left side width W_{L}0 (see FIG. 8) of the shadow margin area set by default based on the internal factors, the external factors, and/or the combinations thereof, as illustrated in (a) and (b) in FIG. 9.

In this regard, the processor 3300 may control the beam pattern of the left lamp of the pair of lamps 3100 such that the left side width of the shadow margin area temporarily corresponds to the second left side width W_{L}2, and corresponds to the reference left side width W_{L}0 (see FIG. 8) of the shadow margin area set by default after a certain period of time elapses. In other words, when controlling the lamp 3100 such that the left side width of the shadow margin area is greater than the reference left side width W_{L}0 (see FIG. 8) of the shadow margin area set by default to prevent the glare of the object ahead when traveling on the curved road that is bent to the left, the processor 3300 may control the lamp 3100 such that the left side width is temporarily great and then the original width is restored after a certain period of time elapses.

The processor 3300 may temporarily control the beam pattern of the lamp 3100 such that the width of the shadow margin area corresponds to the second left side width W_{L}2 based on the internal factors, the external factors, and/or the combinations thereof. For example, when determining that the situation during the travel is the situation in which there is the high risk of accidents because of the glare to the other party based on the brightness information of the road, the steering angular velocity information of the vehicle, and the travel direction information of the preceding vehicle, the processor 3300 may temporarily control the beam pattern of the lamp 3100 such that the left side width of the shadow margin area corresponds to the second left side width W_{L}2 that is greater than the reference left side width W_{L}0 (see FIG. 8) of the shadow margin area set by default.

Further, the processor 3300 is configured to control the beam pattern of the lamp 3100 such that the width of the shadow margin area corresponds to the reference left side width W_{L}0 (see FIG. 8) of the shadow margin area set by default after a specific period of time elapses. In this regard, the specific period of time is set based on the internal factors, the external factors, and/or the combinations thereof.

For example, referring to FIG. 9 together, when determining that the driver's travel tendency corresponds to the safety-oriented type based on the internal factors, the processor 3300 may set the specific period of time to be relatively short. Alternatively, for example, when determining that the driver's travel tendency corresponds to the caution-requiring type based on the internal factors, the processor 3300 may set the specific period of time to be relatively long.

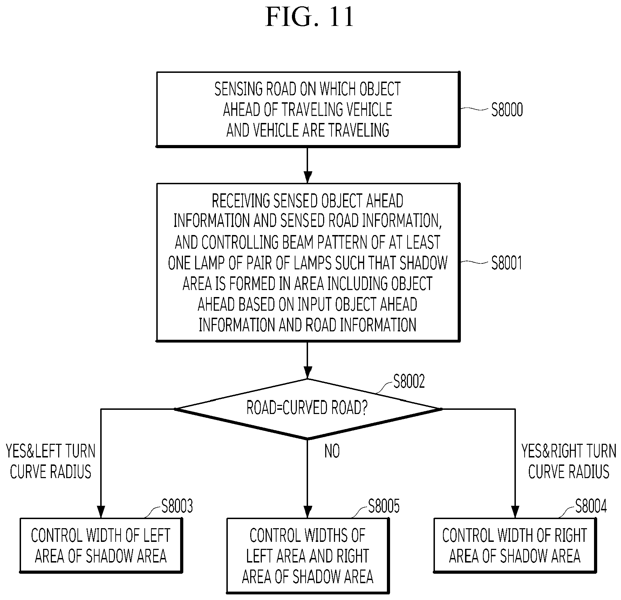

FIG. 11 shows a lamp control method according to embodiments.

FIG. 11 shows a method in which the vehicle in FIGS. 1 and 2 and the lamp control system 3000 in FIG. 3 control the lamp based on the autonomous driving integrated controller 600 in FIGS. 1 and 2, the processor 3300 in FIG. 3, and the like.

Referring to FIG. 11, the lamp control method according to embodiments may include a step (S8000) of sensing the road on which the object ahead of the traveling vehicle and the vehicle are traveling, and a control step (S8001) of receiving the sensed object ahead information and the sensed road information, and controlling a beam pattern of at least one lamp of the pair of lamps such that the shadow area is formed in the area including the object ahead based on the input object ahead information and road information. The control step (S8001) may include controlling the width of the shadow area based on the internal factors, the external factors, and/or the combinations thereof.

The sensing step (S8000) may be performed by the sensing module 3200 of the lamp control system 3000, and the control step (S8001) may be performed by the processor 3300 of the lamp control system 3000.

The control step (S8001) may include determining whether the road on which the vehicle is currently traveling is the curved road (S8002), and may include controlling at least one of the left area and the right area of the shadow area depending on the determination made in step S8002.

For example, when determining in step S8002 that the road on which the vehicle is currently traveling is the curved road, and that the vehicle is making a left turn or the road is the road that is bent to the left based on the steering information of the vehicle, the road information, and the like, the control step (S8001) may include controlling the width of the shadow area, more specifically, the left area of the shadow margin area (S8003).

Alternatively, for example, when determining in step S8002 that the road on which the vehicle is currently traveling is the curved road and that the vehicle is making a right turn or the road is the road that is bent to the right based on the steering information of the vehicle, the road information, and the like, the control step (S8001) may include controlling the width of the shadow area, more specifically, the right area of the shadow margin area (S8004).

Alternatively, for example, when determining in step S8002 that the road on which the vehicle is currently traveling is a road that is not the curved road, for example, a straight road, the control step (S8001) may include controlling the width of the shadow area, more specifically, both the width of the left area and the width of the right area of the shadow margin area (S8005).

FIG. 12 shows lamp control of a vehicle according to embodiments. FIG. 13 shows examples of internal factors of a lamp control system according to embodiments.

The subject vehicle SV illustrated in FIG. 12 is a vehicle equipped with the lamp control system 3000. The lamp control system 3000 may correspond to the lamp control system 3000 in FIG. 3, and the vehicle may correspond to the vehicle in FIGS. 1 and 2.

FIG. 12 is a view illustrating a specific beam pattern controlled by the processor 3300 based on the internal factors or the external factors of the subject vehicle (hereinafter, referred to as 'SV').

Referring to (a) to (c) in FIG. 12, the processor 3300 may control the beam pattern of the lamp 3100 to correspond to a first beam pattern (see (a) in FIG. 12), a second beam pattern (see (b) in FIG. 12), or a third beam pattern (see (c) in FIG. 12). FIG. 12 illustrates a case in which the lamp 3100 has the three specific beam patterns, but the number of specific beam patterns may not be limited thereto and may be greater or smaller. However, for convenience of description, a following description will be made by exemplifying the case in which there are the three specific beam patterns.

As described in FIG. 3, the lamp control system 3000 according to embodiments may control the beam pattern of the lamp 3100 to the specific beam pattern based on the driver's travel tendency information, the environmental information, the vehicle information, and the like. That is, the lamp control system 3000 according to embodiments may provide a beam pattern optimized for the driver's tendency or the situation during the travel by controlling the irradiation distance or the width of the beam irradiated by the lamp 3100.

For example, the specific beam pattern may include the first beam pattern, the second beam pattern, and/or the third beam pattern.

(a) in FIG. 12 shows a case in which the processor 3300 controls the lamp 3100 to irradiate the beam based on the first beam pattern. (b) in FIG. 12 shows a case in which the processor 3300 controls the lamp 3100 to irradiate the beam based on the second beam pattern. (c) in FIG. 12 shows a case in which the processor 3300 controls the lamp 3100 to irradiate the beam based on the third beam pattern.

Referring to (a) and (b) in FIG. 12, in the case of the SV in which the lamp 3100 irradiates the beam based on the second beam pattern, an irradiation distance of the beam formed by the SV may be smaller than an irradiation distance of the beam formed by the SV in which the lamp 3100 irradiates the beam based on the first beam pattern. In addition, in the case of SV in which the lamp 3100 irradiates the beam based on the second beam pattern, a width of the beam formed by the SV may be greater than a width of the beam formed by the SV in which the lamp 3100 irradiates the beam based on the first beam pattern.

That is, an area formed by the lamp 3100 irradiating the beam based on the second beam pattern may be formed longer in a width direction and shorter in a longitudinal direction than an area formed by the lamp 3100 irradiating the beam based on the first beam pattern. Accordingly, the area formed by the lamp 3100 irradiating the beam based on the second beam pattern may not be formed at a relatively farther distance than the area formed by the lamp 3100 irradiating the beam based on the first beam pattern, and as a result, long-distance visibility may be reduced and light width may be widened.

Referring to (a) and (c) in FIG. 12, in the case of SV in which the lamp 3100 irradiates the beam based on the third beam pattern, an irradiation distance of the beam formed by the SV may be greater than the irradiation distance of the beam formed by the SV in which the lamp 3100 irradiates the beam based on the first beam pattern. In addition, in the case of SV in which the lamp 3100 irradiates the beam based on the third beam pattern, a width of the beam formed by the SV may be greater than the width of the beam formed by the SV in which the lamp 3100 irradiates the beam based on the first beam pattern.

That is, an area formed by the lamp 3100 irradiating the beam based on the third beam pattern may be formed to be longer in the width direction and shorter in the longitudinal direction than the area formed by the lamp 3100 irradiating the beam based on the first beam pattern. Therefore, the area formed by the lamp 3100 irradiating the beam based on the third beam pattern may also be formed at a relatively farther distance than the area formed by the lamp 3100 irradiating the beam based on the first beam pattern, and as a result, the long-distance visibility may be increased and the light width may be reduced.

For example, the processor 3300 may control the beam pattern of the lamp 3100 to the specific beam pattern based on the internal factors. The internal factors may be, for example, the driver's travel tendency information as described in FIG. 3.

Referring to FIG. 13 together, the internal factors may include the driver's acceleration tendency information, the driver's safe distance tendency information, or the driver's lane change tendency information. The processor 3300 may analyze the internal factors, that is, the driver's travel tendency, based on the driver's acceleration tendency information, the driver's safe distance tendency information, the driver's lane change tendency information, and/or the combinations thereof. The analyzed internal factors may be stored in the memory described in FIGS. 1 and 2.

For example, the processor 3300 may categorize the driver's travel tendencies into the caution-requiring type/normal type/safety-oriented type as illustrated in FIG. 13. Then, the processor 3300 may control the beam pattern of the lamp 3100 to the second beam pattern illustrated in (b) in FIG. 12 in the case of the caution-requiring type, control the beam pattern of the lamp 3100 to the third beam pattern illustrated in (c) in FIG. 12 in the case of the safety-oriented type, and control the beam pattern of the lamp 3100 to the first beam pattern illustrated in (a) in FIG. 12 in the case of the normal type, based on the categorized driver's tendencies.

For example, when the driver's travel tendency corresponds to the caution-requiring type, it may mean that the driver has a strong tendency to accelerate/decelerate, has a short safe distance from the preceding vehicle, and frequently changes the lane when traveling. Therefore, in this case, because the driver's traveling behavior may be more variable or dynamic than that of the driver in the normal type, the processor 3300 may control the area of the beam irradiated by the lamp 3100 to have the low long-distance visibility and the great light width. For example, as shown in (b) in FIG. 12, the processor 3300 may control the beam pattern such that the irradiation distance of the beam irradiated by the lamp 3100 is relatively smaller than that in the case of the normal type and the width thereof is relatively greater than that in the case of the normal type.

Alternatively, for example, when the driver's travel tendency corresponds to the safety-oriented type, it may mean that the driver has a weak tendency to accelerate/decelerate, has a long safe distance from the preceding vehicle, and maintains the lane when traveling. Therefore, in this case, because the driver's traveling behavior may be more static than that of the driver in the normal type, the processor 3300 may control the area of the beam irradiated by the lamp 3100 to be formed to have the high long-distance visibility and the small width. For example, as shown in (c) in FIG. 12, the processor 3300 may control the beam pattern such that the irradiation distance of the beam irradiated by the lamp 3100 is relatively greater than that in the case of the normal type and the width thereof is relatively smaller than that in the case of the normal type.

Alternatively, for example, when the driver's travel tendency corresponds to the normal type, it may mean that the driver has the normal tendency to accelerate, has the normal safe distance from the preceding vehicle, and has the normal tendency to maintain the lane while traveling. Therefore, when the driver's travel tendency corresponds to the normal type, the processor 3300 may control the area of the beam irradiated by the lamp 3100 to be formed to have higher long-distance visibility than that in the case of the caution-requiring type and greater width than that in the case of the normal type. For example, as shown in (a) in FIG. 12, the processor 3300 may control the beam pattern such that the irradiation distance of the beam irradiated by the lamp 3100 is relatively greater than that in the case of the caution-requiring type and the width of the beam is relatively greater than that in the case of the safety-oriented type.

That is, for example, when determining that the driver's travel tendency corresponds to the caution-requiring type, the lamp control system 3000 according to embodiments may control the beam pattern of the lamp 3100 such that the long-distance visibility is relatively lower than that in the case of the normal type to prevent the glare of the object because there is a high probability that the object is present around the vehicle. Alternatively, for example, when determining that the driver's travel tendency corresponds to the safety-oriented type, the lamp control system 3000 according to embodiments may control the beam pattern of the lamp 3100 such that the long-distance visibility is relatively higher than that in the case of the normal type to enhance the driver's visibility rather than prevent the glare of the object because there is a high probability that the object is not present around the vehicle.

Therefore, the lamp control system 3000 according to embodiments may efficiently control the area of the beam irradiated by the lamp 3100 based on the driver's tendency.

In addition, the processor 3300 may control the beam pattern of the lamp 3100 to the specific beam pattern based on the external factors. The external factors may include, for example, the information on the road on which the vehicle is traveling, the brightness information of the road on which the vehicle is traveling, and/or the travel state information of the vehicle sensed by the sensing module 3200, as described in FIG. 3. The processor 3300 may analyze the external factors based on the information on the road on which the vehicle is traveling, the road brightness information, the travel state information of the vehicle, and/or the combinations thereof. The analyzed external factors may be stored in the memory described in FIGS. 1 and 2.

For example, when determining that the road on which the vehicle is traveling is the straight road based on the information on the road on which the vehicle is traveling, the processor 3300 may control the beam pattern of the lamp 3100 to the specific beam pattern.

The processor 3300 may receive the information on the road on which the vehicle is traveling, sensed by the sensing module 3200. Referring to FIG. 3, for example, the camera 3201, the navigation 3203, and the steering angle sensor 3204 may sense whether the road on which the vehicle is traveling is the straight road or the curved road, or sense information that is a basis of the information on the road on which the vehicle is traveling. The camera 3201, the navigation 3203, and the steering angle sensor 3204 may deliver/transmit the sensed road information or information that is the basis of the road information to the processor 3300, and the processor 3300 may determine the road information directly or determine the road information via the information that is the basis of the road information.

Therefore, when determining that the road on which the vehicle is currently traveling is the straight road, the processor 3300 may control the beam pattern of the lamp 3100 to the specific beam pattern. More specifically, the beam pattern of the lamp 3100 may be controlled to the first beam pattern, the second beam pattern, or the third beam pattern based on the driver's travel tendency.

Alternatively, for example, when determining that the brightness of the road on which the vehicle is traveling is equal to or lower than the reference brightness based on the brightness information of the road on which the vehicle is traveling, the processor 3300 may control the beam pattern of the lamp 3100 to the specific beam pattern.

The processor 3300 may receive the brightness information of the road on which the vehicle is traveling, sensed by the sensing module 3200. Referring to FIG. 3 together, for example, the camera 3201 or the navigation 3203 may sense the type or the shape of the road, such as whether the road on which the vehicle is traveling is the unpaved road or the paved road or whether there is the streetlight on the road, and the illuminance sensor 3205 may sense the brightness level of light outside the vehicle. The information on the type or the shape of the road sensed by the camera 3201 or the navigation 3203 may be delivered/transmitted to the processor 3300, and the processor 3300 may determine the brightness information of the road based on the information on the type or the shape of the road. Alternatively, the brightness information of light outside the vehicle sensed by the illuminance sensor 3205 may be delivered/transmitted to the processor 3300, and the processor 3300 may determine the brightness information of the road based on the brightness information of external light.

Therefore, when determining that the road on which the vehicle is traveling is the road without or with slightly insufficient streetlights, which has the high risk of accidents, based on the input road brightness information, the processor 3300 may control the beam pattern of the lamp 3100 to the specific beam pattern. More specifically, the beam pattern of the lamp 3100 may be controlled to the first beam pattern, the second beam pattern, or the third beam pattern based on the driver's travel tendency.

Alternatively, for example, the processor 3300 may control the beam pattern of the lamp 3100 to the specific beam pattern based on the current travel state information of the vehicle. That is, the processor 3300 may determine whether to control the beam pattern of the lamp 3100 to the specific beam pattern based on whether the vehicle is currently traveling or stopped/stationary.

The processor 3300 may receive information on the travel state of the vehicle sensed by the sensing module 3200. Referring to FIGS. 1 to 3 together, for example, the various information indicating the travel state and the behavior of the autonomous vehicle, such as the steering angle formed by the driver manipulating the steering wheel, the accelerator pedal stroke or the brake pedal stroke generated by pressing the accelerator pedal or the brake pedal, and the behavior of the autonomous vehicle including the vehicle speed, the acceleration, the yaw, the pitch, and the roll, sensed via the steering angle sensor 210, the APS 220, the vehicle speed sensor 230, the acceleration sensor 240, and the yaw/pitch/roll sensor 250 may be sensed. The various information sensed by the steering angle sensor 210, the APS 220, the vehicle speed sensor 230, the acceleration sensor 240, and the yaw/pitch/roll sensor 250 may be delivered/transmitted to the processor 3300, and the processor 3300 may determine whether the vehicle is currently traveling or stopped/stationary based on the various information.

Therefore, when determining that the controlling of the beam pattern of the lamp 3100 to the specific beam pattern does not cause dazzle to the driver, such as when the vehicle is stopped or stationary, based on the input travel state information, the processor 3300 may control the beam pattern of the lamp 3100 to the specific beam pattern. More specifically, the beam pattern of the lamp 3100 may be controlled to the first beam pattern, the second beam pattern, or the third beam pattern based on the driver's travel tendency. That is, when determining that the dazzle is not caused to the driver, the processor 3300 may switch the beam pattern of the lamp 3100 from the first beam pattern to the second beam pattern or from the first beam pattern to the third beam pattern.

Therefore, the lamp control system 3000 according to embodiments may efficiently control the beam pattern of the lamp 3100 to the specific beam pattern based on the environmental information or the vehicle information, such as the information on the road on which the vehicle is currently traveling, the brightness information of the road on which the vehicle is currently traveling, and whether the vehicle is currently traveling.

The embodiments have been described in terms of the method and/or the device, and the descriptions of the method and the device may be applied in a complementary manner.

For convenience of description, the description has been made with the respective drawing, but it is also available to design a new embodiment by combining the embodiments described with the respective drawings to each other. In addition, designing a computer-readable recording medium in which a program for executing the embodiments described above is recorded based on needs of a person skilled in the art is also within the scope of the embodiments. In the device and the method according to the embodiments, the configurations and the methods of the embodiments as described above may not be applied in a limited manner, but all or some of the embodiments may be selectively combined with each other such that various modifications may be made. Although the preferred embodiments of the invention have been illustrated and described, the embodiments may not be limited to the specific embodiments described above, various modifications may be made by a person skilled in the art to which the invention pertains without departing from the scope of the invention as claimed in the claims.

The various components of the device of the embodiments may be implemented by hardware, software, firmware, or combinations thereof. The various components of the embodiments may be implemented via a single chip, for example, a single hardware circuit. Depending on the embodiments, the components of the embodiments may be implemented via separate chips. Depending on the embodiments, at least one of the components of the device of the embodiments may be composed of one or more processors that may execute one or more programs, and the one or more programs may perform, or include instructions for performing, one or more of the operations/methods according to the embodiments. Executable instructions for performing the methods/operations of the device of the embodiments may be stored in a non-transitory CRM or other computer program products built to be executed by the one or more processors, or may be stored in a transitory CRM or other computer program products built to be executed by the one or more processors. In addition, the memory of the embodiments may be used as a concept including not only a volatile memory (e.g., a RAM or the like), but also a non-volatile memory, a flash memory, a PROM, and the like. Additionally, the memory may include implementations in a form of carrier wave, such as transmission via the Internet. Additionally, a processor-readable recording medium may store processor-readable code in a distributed manner across a computer system connected via a network, allowing the code to be executed in a distributed fashion.

In this document, "/" and "," are interpreted as "and/or". For example, "A/B" is interpreted as "A and/or B", and "A, B" is interpreted as "A and/or B". Additionally, "A/B/C" means "at least one of A, B, and/or C". Also, "A, B, C" means "at least one of A, B, and/or C". Additionally, "or" in this document is interpreted as "and/or". For example, "A or B" may mean 1) "A" only, 2) "B" only, or 3) "A and B". In other words, "or" in this document may mean "additionally or alternatively".

Terms such as first, second, and the like may be used to describe various components of the embodiments. However, the various components according to the embodiments should not be limited in their interpretation by these terms. These terms are merely used to distinguish one component from another. For example, a first user input signal may be referred to as a second user input signal. Similarly, the second user input signal may be referred to as the first user input signal. The use of these terms should be interpreted as not departing from the scope of the various embodiments. Although the first user input signal and the second user input signal are both user input signals, they do not mean the same user input signal unless the context clearly indicates otherwise.

The terminology used to describe the embodiments is for the purpose of describing particular embodiments and is not intended to be limiting of the embodiments. As used in the description of the embodiments and in the claims, the singular expression is intended to include the plural expression unless the context clearly dictates otherwise. The expression "and/or" is used to have a meaning including all possible combinations of the terms. The expression "include" describes the presence of features, numbers, steps, elements, and/or components, but does not mean that additional features, numbers, steps, elements, and/or components are not included. Conditional expressions such as "in case of ~", "when ~", and the like used to describe the embodiments are not interpreted as being limited to only optional cases. Rather, they are intended to mean that, when specific conditions are satisfied, corresponding operations are performed, or relevant definitions are interpreted accordingly.

In addition, the operations according to the embodiments described in this document may be performed by a transceiver including the memory and/or the processor according to the embodiments. The memory may store programs for processing/controlling the operations according to the embodiments, and the processor may control the various operations described in this document. The processor may be referred to as a controller or the like. The operations according to the embodiments may be performed by firmware, software, and/or combinations thereof, and the firmware, the software, and/or the combinations thereof may be stored in the processor or in the memory.

In one example, the operations according to the embodiments described above may be performed by a transmitter and/or a receiver according to the embodiments. The transceiver may include a transceiver unit that transmits and receives media data, a memory that stores instructions (program codes, algorithms, flowcharts, and/or data) for a process according to the embodiments, and a processor that controls operations of the transceiver.

The processor may be referred to as the controller or the like, and may correspond to, for example, hardware, software, and/or combinations thereof. The operations according to the embodiments described above may be performed by the processor. In addition, the processor may be implemented as an encoder/decoder or the like for the operations of the embodiments described above.

As described above, the relevant content has been described in the best mode for carrying out the invention.

As described above, the invention may be applied entirely or partially to autonomous valet driving device and system.

## Claims

1. A system (3000) for controlling a lamp, the system (3000) comprising:
a pair of lamps (3100) configured to irradiate beams forward based on respective beam patterns thereof;
a sensing module (3200) configured to sense an object in front of a subject vehicle in motion; and
a processor (3300) configured to:
receive information on the sensed object; and
control the beam pattern of at least one of the pair of lamps (3100) such that a shadow area is formed in an area including the object based on the input object information,
wherein the shadow area includes:
a main shadow area corresponding to a width of the object; and
a shadow margin area having a predetermined width from each of both sides of the main shadow area, and
wherein the processor (3300) is further configured to control the width of the shadow margin area based on at least one of internal factors, external factors, or any combination thereof,
**characterized in that**
the processor (3300) is further configured to:
set a specific period of time based on at least one of the internal factors, the external factors, or any combination thereof; and
temporarily control the width of the shadow margin area and restore the width of the shadow margin area after the specific period of time elapses, and
wherein the internal factors include at least one of acceleration/deceleration tendency information, safe distance tendency information, reaction speed tendency information, lane keeping tendency information of a driver, or any combination thereof, and
wherein the external factors include at least one of information on a road where the vehicle is traveling, brightness information of the road where the vehicle is traveling, steering information of the vehicle, illuminance information, travel direction information of the object, or any combination thereof.

2. The system of claim 1,
wherein the processor is further configured to:
analyze the internal factors based on at least one of the acceleration tendency information, the safe distance tendency information, the reaction speed tendency information, the lane keeping tendency information of the driver, or any combination thereof; and
analyze the external factors based on at least one of the road information, the road brightness information, the steering information, the illuminance information, the travel direction information, or any combination thereof.

3. The system (3000) of claim 2, wherein the sensing module (3200) is further configured to sense the road information, and
wherein the processor (3300) is configured to receive the road information, and when the road where the vehicle is traveling corresponds to a specific road based on the received road information, control the width of the shadow margin area.

4. The system (3000) of claim 2 or 3, wherein the sensing module (3200) is further configured to sense the road brightness information, and
wherein the processor (3300) is further configured to:
receive the road brightness information; and
in response to brightness of the road where the vehicle is traveling being equal to or lower than a reference brightness based on the received road brightness information, control the width of the shadow margin area.

5. The system (3000) of any one of claims 2 to 4, wherein the sensing module (3200) is further configured to sense the steering information, and
wherein the processor (3300) is further configured to:
receive the steering information; and
in response to a steering degree of the vehicle being equal to or greater than a reference steering degree based on the received steering information, control the width of the shadow margin area.

6. The system (3000) of any one of claims 1 to 5, wherein the sensing module (3200) is further configured to sense the illuminance information, and
wherein the processor (3300) is further configured to:
receive the illuminance information; and
in response to a vehicle external illuminance value being equal to or lower than a reference illuminance value based on the received illuminance information, control the width of the shadow margin area.

7. The system (3000) of any one of claims 2 to 6, wherein the sensing module (3200) is further configured to sense the travel direction information, and
wherein the processor (3300) is further configured to:
receive the travel direction information; and
in response to a travel direction of the object corresponding to the same direction as a travel direction of the vehicle based on the received travel direction information, control the width of the shadow margin area.

8. The system (3000) of any one of claims 1 to 7, wherein the sensing module (3200) is further configured to sense a road where the vehicle is traveling,
wherein the processor (3300) is further configured to, in response to a determination that the road where the vehicle is traveling is a curved road based on the sensed road information, control one of a width of a left area and a width of a right area of the shadow margin area to a first width or a second width based on at least one of the internal factors and the external factors, and
wherein the first width has a smaller value than the second width.

9. The system (3000) of any one of claims 1 to 8, wherein the processor (3300) is further configured to control the beam patterns of the pair of lamps to a specific beam pattern such that at least one of irradiation distances and widths of the beams irradiated by the pair of lamps varies based on at least one of the internal factors and the external factors.

10. The system (3000) of any one of claims 1 to 9,
wherein the processor (3300) is further configured to:
analyze the internal factors based on at least one of the acceleration/deceleration tendency information, the safe distance tendency information, the lane change tendency information of the driver, or any combination thereof; and
analyze the external factors based on at least one of the information on the road where the vehicle is traveling, the brightness information of the road where the vehicle is traveling, the travel state information of the vehicle, or any combination thereof.

11. The system of claim 9, wherein the specific beam pattern includes a first beam pattern, a second beam pattern, and a third beam pattern,
wherein an irradiation distance of a beam irradiated based on the second beam pattern is smaller than an irradiation distance of a beam irradiated based on the first beam pattern, and a width of the beam irradiated based on the second beam pattern is greater than a width of the beam irradiated based on the first beam pattern, and
wherein an irradiation distance of a beam irradiated based on the third beam pattern is greater than the irradiation distance of the beam irradiated based on the first beam pattern, and a width of the beam irradiated based on the third beam pattern is smaller than the width of the beam irradiated based on the first beam pattern.

12. A method for controlling a lamp of controlling respective beam patterns of a pair of lamps configured to irradiate beams forward based on the respective beam patterns thereof, the method comprising:
a sensing step (S800) of sensing an object in front of a traveling vehicle; and
a control step (S8001) of receiving information on the sensed object, and controlling the beam pattern of at least one of the pair of lamps such that a shadow area is formed in an area including the object based on the input object information,
wherein the shadow area includes:
a main shadow area corresponding to a width of the object; and
a shadow margin area having a predetermined width from each of both sides of the main shadow area, and
wherein the control step includes controlling the width of the shadow margin area based on at least one of internal factors, external factors, or any combination thereof,
**characterized in that** the method further comprises:
setting a specific period of time based on at least one of the internal factors, the external factors, or any combination thereof; and
temporarily control the width of the shadow margin area and restore the width of the shadow margin area after the specific period of time elapses, and
wherein the internal factors include at least one of acceleration/deceleration tendency information, safe distance tendency information, reaction speed tendency information, lane keeping tendency information of a driver, or any combination thereof, and
wherein the external factors include at least one of information on a road where the vehicle is traveling, brightness information of the road where the vehicle is traveling, steering information of the vehicle, illuminance information, travel direction information of the object, or any combination thereof.

13. The method of claim 12,
wherein the control step includes:
analyzing the internal factors based on at least one of the acceleration tendency information, the safe distance tendency information, the reaction speed tendency information, the lane keeping tendency information of the driver, or any combination thereof; and
analyzing the external factors based on at least one of the road information, the road brightness information, the steering information, the illuminance information, the travel direction information, or any combination thereof.

14. A vehicle (1000) comprising the system (3000) of claim 1.

## Patentansprüche

1. System (3000) zum Steuern einer Lampe, wobei das System (3000) umfasst:
ein Paar von Lampen (3100), die dazu eingerichtet sind, auf Grundlage ihrer jeweiligen Strahlmuster Strahlen nach vorn auszustrahlen;
ein Erfassungsmodul (3200), das dazu eingerichtet ist, ein Objekt vor einem sich bewegenden Eigenfahrzeug zu erfassen; und
einen Prozessor (3300), der eingerichtet ist zum:
Empfangen von Informationen über das erfasste Objekt; und
Steuern des Strahlmusters von mindestens einer Lampe des Paars von Lampen (3100) derart, dass auf Grundlage der eingegebenen Objektinformationen ein Schattenbereich in einem das Objekt einschließenden Bereich gebildet wird,
wobei der Schattenbereich umfasst:
einen Hauptschattenbereich, der einer Breite des Objekts entspricht; und
einen Schattenrandbereich, der sich mit einer vorbestimmten Breite von jeder der beiden Seiten des Hauptschattenbereichs erstreckt, und
wobei der Prozessor (3300) ferner dazu eingerichtet ist, die Breite des Schattenrandbereichs auf Grundlage mindestens eines von internen Faktoren, externen Faktoren oder einer beliebigen Kombination davon zu steuern,
**dadurch gekennzeichnet, dass** der Prozessor (3300) ferner eingerichtet ist zum:
Festlegen eines bestimmten Zeitraums auf Grundlage mindestens eines der internen Faktoren, der externen Faktoren oder einer beliebigen Kombination davon; und
vorübergehenden Steuern der Breite des Schattenrandbereichs und Wiederherstellen der Breite des Schattenrandbereichs nach Ablauf des bestimmten Zeitraums, und
wobei die internen Faktoren mindestens eines von Informationen über eine Beschleunigungs-/Verzögerungstendenz, Informationen über eine Tendenz zur Einhaltung eines Sicherheitsabstands, Informationen über eine Reaktionsgeschwindigkeitstendenz, Informationen über eine Spurhaltetendenz eines Fahrers oder einer beliebigen Kombination davon umfassen, und
wobei die externen Faktoren mindestens eines von Informationen über eine Straße, auf der sich das Fahrzeug bewegt, Helligkeitsinformationen der Straße, auf der sich das Fahrzeug bewegt, Lenkinformationen des Fahrzeugs, Beleuchtungsstärkeinformationen, Fahrtrichtungsinformationen des Objekts oder einer beliebigen Kombination davon umfassen.

2. System nach Anspruch 1,
wobei der Prozessor ferner eingerichtet ist zum:
Analysieren der internen Faktoren auf Grundlage mindestens eines von den Informationen über die Beschleunigungstendenz, den Informationen über die Tendenz zur Einhaltung eines Sicherheitsabstands, den Informationen über die Reaktionsgeschwindigkeitstendenz, den Informationen über die Spurhaltetendenz des Fahrers oder einer beliebigen Kombination davon; und
Analysieren der externen Faktoren auf Grundlage mindestens eines von den Straßeninformationen, den Straßenhelligkeitsinformationen, den Lenkinformationen, den Beleuchtungsstärkeinformationen, den Fahrtrichtungsinformationen oder einer beliebigen Kombination davon.

3. System (3000) nach Anspruch 2, wobei das Erfassungsmodul (3200) ferner dazu eingerichtet ist, die Straßeninformationen zu erfassen, und
wobei der Prozessor (3300) dazu eingerichtet ist, die Straßeninformationen zu empfangen und, wenn die Straße, auf der sich das Fahrzeug bewegt, auf Grundlage der empfangenen Straßeninformationen einer bestimmten Straße entspricht, die Breite des Schattenrandbereichs zu steuern.

4. System (3000) nach Anspruch 2 oder 3, wobei das Erfassungsmodul (3200) ferner dazu eingerichtet ist, die Straßenhelligkeitsinformationen zu erfassen, und
wobei der Prozessor (3300) ferner eingerichtet ist zum:
Empfangen der Straßenhelligkeitsinformationen; und
als Reaktion darauf, dass die Helligkeit der Straße, auf der sich das Fahrzeug bewegt, auf Grundlage der empfangenen Straßenhelligkeitsinformationen gleich einer Referenzhelligkeit oder niedriger als diese ist, Steuern der Breite des Schattenrandbereichs.

5. System (3000) nach einem der Ansprüche 2 bis 4, wobei das Erfassungsmodul (3200) ferner dazu eingerichtet ist, die Lenkinformationen zu erfassen, und
wobei der Prozessor (3300) ferner eingerichtet ist zum:
Empfangen der Lenkinformationen; und
als Reaktion darauf, dass ein Lenkwinkel des Fahrzeugs auf Grundlage der empfangenen Lenkinformationen gleich einem Referenzlenkwinkel oder größer als dieser ist, Steuern der Breite des Schattenrandbereichs.

6. System (3000) nach einem der Ansprüche 1 bis 5, wobei das Erfassungsmodul (3200) ferner dazu eingerichtet ist, die Beleuchtungsstärkeinformationen zu erfassen, und
wobei der Prozessor (3300) ferner eingerichtet ist zum:
Empfangen der Beleuchtungsstärkeinformationen; und
als Reaktion darauf, dass ein Beleuchtungsstärkewert außerhalb des Fahrzeugs auf Grundlage der empfangenen Beleuchtungsstärkeinformationen gleich einem Referenzbeleuchtungsstärkewert oder niedriger als dieser ist, Steuern der Breite des Schattenrandbereichs.

7. System (3000) nach einem der Ansprüche 2 bis 6, wobei das Erfassungsmodul (3200) ferner dazu eingerichtet ist, die Fahrtrichtungsinformationen zu erfassen, und
wobei der Prozessor (3300) ferner eingerichtet ist zum:
Empfangen der Fahrtrichtungsinformationen; und
als Reaktion darauf, dass eine Fahrtrichtung des Objekts auf Grundlage der empfangenen Fahrtrichtungsinformationen dieselbe Richtung wie eine Fahrtrichtung des Fahrzeugs aufweist, Steuern der Breite des Schattenrandbereichs.

8. System (3000) nach einem der Ansprüche 1 bis 7, wobei das Erfassungsmodul (3200) ferner dazu eingerichtet ist, eine Straße zu erfassen, auf der sich das Fahrzeug bewegt,
wobei der Prozessor (3300) ferner dazu eingerichtet ist, als Reaktion auf eine Feststellung, dass die Straße, auf der sich das Fahrzeug bewegt, auf Grundlage der erfassten Straßeninformationen eine kurvige Straße ist, eine Breite eines linken Bereichs oder eine Breite eines rechten Bereichs des Schattenrandbereichs auf Grundlage mindestens eines der internen Faktoren und der externen Faktoren auf eine erste Breite oder eine zweite Breite zu steuern, und
wobei die erste Breite einen kleineren Wert als die zweite Breite aufweist.

9. System (3000) nach einem der Ansprüche 1 bis 8, wobei der Prozessor (3300) ferner dazu eingerichtet ist, die Strahlmuster des Paars von Lampen auf ein bestimmtes Strahlmuster zu steuern, sodass mindestens eines von den Bestrahlungsabständen und den Breiten der von dem Paar von Lampen ausgestrahlten Strahlen auf Grundlage mindestens eines der internen Faktoren und der externen Faktoren variiert.

10. System (3000) nach einem der Ansprüche 1 bis 9,
wobei der Prozessor (3300) ferner eingerichtet ist zum:
Analysieren der internen Faktoren auf Grundlage mindestens eines von den Informationen über die Beschleunigungs-/Verzögerungstendenz, den Informationen über die Tendenz zur Einhaltung eines Sicherheitsabstands, den Informationen über die Fahrspurwechseltendenz des Fahrers oder einer beliebigen Kombination davon; und
Analysieren der externen Faktoren auf Grundlage mindestens eines von den Informationen über die Straße, auf der sich das Fahrzeug bewegt, den Helligkeitsinformationen der Straße, auf der sich das Fahrzeug bewegt, den Fahrzustandsinformationen des Fahrzeugs oder einer beliebigen Kombination davon.

11. System nach Anspruch 9, wobei das bestimmte Strahlmuster ein erstes Strahlmuster, ein zweites Strahlmuster und ein drittes Strahlmuster umfasst,
wobei ein Bestrahlungsabstand eines auf Grundlage des zweiten Strahlmusters ausgestrahlten Strahls kleiner als ein Bestrahlungsabstand eines auf Grundlage des ersten Strahlmusters ausgestrahlten Strahls ist und eine Breite des auf Grundlage des zweiten Strahlmusters ausgestrahlten Strahls größer als eine Breite des auf Grundlage des ersten Strahlmusters ausgestrahlten Strahls ist, und
wobei ein Bestrahlungsabstand eines auf Grundlage des dritten Strahlmusters ausgestrahlten Strahls größer als der Bestrahlungsabstand des auf Grundlage des ersten Strahlmusters ausgestrahlten Strahls ist und eine Breite des auf Grundlage des dritten Strahlmusters ausgestrahlten Strahls kleiner als die Breite des auf Grundlage des ersten Strahlmusters ausgestrahlten Strahls ist.

12. Verfahren zum Steuern einer Lampe, wobei jeweilige Strahlmuster eines Paars von Lampen gesteuert werden, die dazu eingerichtet sind, auf Grundlage ihrer jeweiligen Strahlmuster Strahlen nach vorn auszustrahlen, wobei das Verfahren umfasst:
einen Erfassungsschritt (S800) zum Erfassen eines Objekts vor einem sich bewegenden Fahrzeug; und
einen Steuerschritt (S8001) zum Empfangen von Informationen über das erfasste Objekt und zum Steuern des Strahlmusters von mindestens einer Lampe des Paars von Lampen derart, dass auf Grundlage der eingegebenen Objektinformationen ein Schattenbereich in einem das Objekt einschließenden Bereich gebildet wird,
wobei der Schattenbereich umfasst:
einen Hauptschattenbereich, der einer Breite des Objekts entspricht; und
einen Schattenrandbereich, der sich mit einer vorbestimmten Breite von jeder der beiden Seiten des Hauptschattenbereichs erstreckt, und
wobei der Steuerschritt das Steuern der Breite des Schattenrandbereichs auf Grundlage mindestens eines von internen Faktoren, externen Faktoren oder einer beliebigen Kombination davon umfasst,
**dadurch gekennzeichnet, dass** das Verfahren ferner umfasst:
Festlegen eines bestimmten Zeitraums auf Grundlage mindestens eines der internen Faktoren, der externen Faktoren oder einer beliebigen Kombination davon; und
vorübergehendes Steuern der Breite des Schattenrandbereichs und Wiederherstellen der Breite des Schattenrandbereichs nach Ablauf des bestimmten Zeitraums, und
wobei die internen Faktoren mindestens eines von Informationen über eine Beschleunigungs-/Verzögerungstendenz, Informationen über eine Tendenz zur Einhaltung eines Sicherheitsabstands, Informationen über eine Reaktionsgeschwindigkeitstendenz, Informationen über eine Spurhaltetendenz eines Fahrers oder einer beliebigen Kombination davon umfassen, und
wobei die externen Faktoren mindestens eines von Informationen über eine Straße, auf der sich das Fahrzeug bewegt, Helligkeitsinformationen der Straße, auf der sich das Fahrzeug bewegt, Lenkinformationen des Fahrzeugs, Beleuchtungsstärkeinformationen, Fahrtrichtungsinformationen des Objekts oder einer beliebigen Kombination davon umfassen.

13. Verfahren nach Anspruch 12,
wobei der Steuerschritt umfasst:
Analysieren der internen Faktoren auf Grundlage mindestens eines von den Informationen über die Beschleunigungstendenz, den Informationen über die Tendenz zur Einhaltung eines Sicherheitsabstands, den Informationen über die Reaktionsgeschwindigkeitstendenz, den Informationen über die Spurhaltetendenz des Fahrers oder einer beliebigen Kombination davon; und
Analysieren der externen Faktoren auf Grundlage mindestens eines von den Straßeninformationen, den Straßenhelligkeitsinformationen, den Lenkinformationen, den Beleuchtungsstärkeinformationen, den Fahrtrichtungsinformationen oder einer beliebigen Kombination davon.

14. Fahrzeug (1000), umfassend das System (3000) nach Anspruch 1.

## Revendications

1. Système (3000) de commande d'une lampe, le système (3000) comprenant:
une paire de lampes (3100) conçues pour émettre des faisceaux vers l'avant selon leurs motifs de rayonnement respectifs;
un module de détection (3200) conçu pour détecter un objet situé devant le véhicule concerné en mouvement; et
un processeur (3300) configuré pour :
recevoir des informations sur l'objet détecté; et
régler le diagramme de rayonnement d'au moins l'une des deux lampes (3100) de manière à former une zone d'ombre dans une zone comprenant l'objet, sur la base des informations d'objet d'entrée,
dans lequel la zone d'ombre comprend:
dans lequel la zone d'ombre principale correspondant à une largeur de l'objet; et
une zone périphérique d'ombre présentant une largeur prédéterminée de part et d'autre de la zone d'ombre principale, et
dans lequel le processeur (3300) est en outre configuré pour régler la largeur de la zone de marge d'ombre en fonction d'au moins l'un parmi des facteurs internes, des facteurs externes ou leur combinaison,
**caractérisé en ce que** le processeur (3300) est en outre configuré pour:
définir une période spécifique en fonction d'au moins l'un parmi les facteurs internes, les facteurs externes ou leur combinaison; et
régler temporairement la largeur de la zone de marge d'ombre et rétablir la largeur de la zone de marge d'ombre une fois la période spécifiée écoulée, et
dans lequel les facteurs internes comprennent au moins l'une parmi les informations sur les tendances d'accélération/décélération, les informations sur les tendances de distance de sécurité, les informations sur les tendances de vitesse de réaction, les informations sur les tendances de maintien de la voie d'un conducteur, ou leur quelconque combinaison, et
dans lequel les facteurs externes comprennent au moins l'une parmi les informations relatives à la route sur laquelle circule le véhicule, les informations relatives à la luminosité de la route sur laquelle circule le véhicule, les informations relatives à la direction du véhicule, les informations relatives à l'éclairement, des informations relatives au sens de déplacement de l'objet, ou leur quelconque combinaison.

2. Système selon la revendication 1,
dans lequel le processeur est en outre conçu pour:
analyser les facteurs internes sur la base d'au moins l'une parmi les informations de tendances d'accélération, les informations de tendance de distance de sécurité, les informations de tendance de vitesse de réaction et les informations de tendance de maintien de la voie du conducteur, ou leur quelconque combinaison; et
analyser les facteurs externes sur la base d'au moins l'une parmi les informations relatives à la route, les informations relatives à la luminosité de la route, les informations relatives à la direction, les informations relatives à l'éclairement, les informations relatives au sens de circulation, ou leur quelconque combinaison.

3. Système (300) selon la revendication 2, dans lequel le module de détection (3200) est en outre configuré pour détecter les informations concernant la route, et
dans lequel le processeur (2621) est en outre configuré pour recevoir les informations relatives à la route, et lorsque la route sur laquelle circule le véhicule correspond à une route spécifique d'après les informations routières reçues, régler la largeur de la zone de marge d'ombre.

4. Système (3000) selon la revendication 2 ou 3, dans lequel le module de détection (3200) est en outre configuré pour détecter les informations concernant la luminosité de la route, et
dans lequel le processeur (3300) est en outre configuré pour:
recevoir les informations relatives à la luminosité de la route; et
lorsque la luminosité de la route sur laquelle circule le véhicule est inférieure ou égale à une luminosité de référence déterminée à partir des informations reçues concernant la luminosité de la route, réguler la largeur de la zone de marge d'ombre.

5. Système (3000) selon l'une quelconque des revendications 2 à 4, dans lequel le module de détection (3200) est en outre configuré pour détecter les informations concernant le braquage, et
dans lequel le processeur (3300) est en outre configuré pour:
recevoir les informations relatives au braquage; et
lorsque l'angle de braquage du véhicule est supérieur ou égal à un angle de braquage de référence déterminé à partir des informations de braquage reçues, régler la largeur de la zone de marge d'ombre.

6. Système (3000) selon l'une quelconque des revendications 1 à 5, dans lequel le module de détection (3200) est en outre configuré pour détecter les informations concernant l'éclairage, et
dans lequel le processeur (3300) est en outre configuré pour:
recevoir les informations relatives à l'éclairement; et
lorsque la valeur d'éclairement externe de véhicule est inférieure ou égale d'une valeur d'éclairement de référence sur la base des informations de d'éclairement reçues, régler la largeur de la zone de marge d'ombre.

7. Système (3000) selon l'une quelconque des revendications 2 à 6, dans lequel le module de détection (3200) est en outre configuré pour détecter les informations concernant le sens de circulation, et
dans lequel le processeur (3300) est en outre configuré pour:
recevoir les informations relatives au sens de la circulation; et
en réponse à un sens de déplacement de l'objet correspondant à la même direction que le sens de circulation du véhicule, sur la base des informations de direction de déplacement reçues, régler la largeur de la zone de marge d'ombre.

8. Système (3000) selon l'une quelconque des revendications 1 à 7, dans lequel le module de détection (3200) est en outre configuré pour détecter une route sur laquelle circule le véhicule,
dans lequel le processeur (3300) est en outre configuré pour, dès qu'il est déterminé que la route sur laquelle circule le véhicule est une route sinueuse sur la base des informations relatives à la route détectées, régler l'une parmi la largeur d'une zone gauche, la largeur d'une zone droite de la zone de marge d'ombre à une première largeur ou à une deuxième largeur en fonction d'au moins l'un des facteurs internes et des facteurs externes, et
dans lequel la valeur de la première largeur est inférieure à celle de la seconde largeur.

9. Système (3000) selon l'une quelconque des revendications 1 à 8, dans lequel le processeur (3300) est en outre configuré pour régler les diagrammes de rayonnement de la paire de lampes selon un diagramme de faisceau spécifique, de telle sorte qu'au moins l'une des distances de rayonnement et des largeurs des faisceaux émis par la paire de lampes varie en fonction d'au moins l'un des facteurs internes et des facteurs externes.

10. Système (3000) selon l'une quelconque des revendications 1 à 9,
dans lequel le processeur (3300) est en outre configuré pour:
analyser les facteurs internes sur la base d'au moins l'une parmi les informations de tendances d'accélération/décélération, les informations de tendance de distance de sécurité, les informations de changement de voie, ou leur quelconque combinaison; et
dans lequel les facteurs externes sur la base d'au moins l'une parmi les informations relatives à la route sur laquelle circule le véhicule, les informations relatives à la luminosité de la route sur laquelle circule le véhicule, les informations relatives à la direction du véhicule, les informations relatives à l'état de déplacement du véhicule, ou leur quelconque combinaison.

11. Système selon la revendication 9, dans lequel le motif de rayonnement spécifique comprend un premier motif de rayonnement, un deuxième motif de rayonnement et un troisième motif de rayonnement,
dans lequel la distance de rayonnement d'un faisceau émis selon le deuxième motif de faisceau est inférieure à la distance de rayonnement d'un faisceau émis selon le premier motif de faisceau, et la largeur du faisceau émis selon le deuxième motif de faisceau est supérieure à la largeur du faisceau émis selon le premier motif de faisceau, et
dans lequel la distance de rayonnement d'un faisceau émis selon le troisième motif de faisceau est supérieure à la distance de rayonnement du faisceau émis selon le premier motif de faisceau, et la largeur du faisceau émis selon le troisième motif de faisceau est inférieure à la largeur du faisceau émis selon le premier motif de faisceau.

12. Procédé de commande d'une lampe de réglage des motifs de faisceau respectifs d'une paire de lampes conçues pour émettre des faisceaux vers l'avant en fonction de leurs motifs de faisceau respectifs, le procédé comprenant:
une étape de détection (S800) consistant à détecter un objet situé devant un véhicule en mouvement; et
une étape de commande (S8001) consistant à recevoir des informations sur l'objet détecté et à régler le motif de faisceau d'au moins l'une des deux lampes de manière à former une zone d'ombre dans une zone comprenant l'objet, sur la base des informations d'objet d'entrée,
dans lequel la zone d'ombre comprend:
dans lequel la zone d'ombre principale correspondant à une largeur de l'objet; et
une zone périphérique d'ombre présentant une largeur prédéterminée de part et d'autre de la zone d'ombre principale, et
dans lequel l'étape de commande consiste à régler la largeur de la zone de marge d'ombre en fonction d'au moins l'un parmi des facteurs internes, des facteurs externes ou leur quelconque combinaison,
**caractérisé en ce que** le procédé comprend en outre:
la définition d'une période spécifique en fonction d'au moins l'un parmi les facteurs internes, les facteurs externes ou leur combinaison; et
régler temporairement la largeur de la zone de marge d'ombre et rétablir la largeur de la zone de marge d'ombre une fois la période spécifiée écoulée, et
dans lequel les facteurs internes comprennent au moins l'une parmi les informations sur les tendances d'accélération/décélération, les informations sur les tendances de distance de sécurité, les informations sur les tendances de vitesse de réaction, les informations sur les tendances de maintien de la voie d'un conducteur, ou leur quelconque combinaison, et
dans lequel les facteurs externes comprennent au moins l'une parmi les informations relatives à la route sur laquelle circule le véhicule, les informations relatives à la luminosité de la route sur laquelle circule le véhicule, les informations relatives à la direction du véhicule, les informations relatives à l'éclairement, des informations relatives au sens de déplacement de l'objet, ou leur quelconque combinaison.

13. Procédé selon la revendication 12,
dans lequel l'étape de commande consiste à:
analyser les facteurs internes sur la base d'au moins l'une parmi les informations de tendances d'accélération, les informations de tendance de distance de sécurité, les informations de tendance de vitesse de réaction et les informations de tendance de maintien de la voie du conducteur, ou leur quelconque combinaison; et
analyser les facteurs externes sur la base d'au moins l'une parmi les informations relatives à la route, les informations relatives à la luminosité de la route, les informations relatives à la direction, les informations relatives à l'éclairement, les informations relatives au sens de circulation, ou leur quelconque combinaison.

14. Véhicule (1000) comprenant le système (3000) selon la revendication 1.
